# EUROPÄISCHE PATENTSCHRIFT

(11) **EP 4 210 898 B1**
(45) Veröffentlichungstag und Bekanntmachung des Hinweises auf die Patenterteilung: **27.11.2024**
(21) Anmeldenummer: 21777226.8
(22) Anmeldetag: 08.09.2021
(51) Int. Cl.: B23K 31/00, B23K 31/12, B23K 26/70

(54) **VERFAHREN ZUR ZUSTANDSÜBERWACHUNG EINES LASERBEARBEITUNGSKOPFES UND LASERBEARBEITUNGSSYSTEM ZUM DURCHFÜHREN DESSELBEN**
METHOD FOR MONITORING THE CONDITION OF A LASER MACHINING HEAD, AND LASER MACHINING SYSTEM FOR CARRYING OUT SAID METHOD
PROCÉDÉ DE SURVEILLANCE DE L'ÉTAT D'UNE TÊTE D'USINAGE LASER ET SYSTÈME D'USINAGE LASER POUR LA MISE EN OEUVRE DE CE PROCÉDÉ

(30) Priorität: 09.09.2020 DE 102020123479
(43) Veröffentlichungstag der Anmeldung: 19.07.2023
(73) Patentinhaber: Precitec GmbH & Co. KG, 76571 Gaggenau-Bad Rotenfels (DE)
(72) Erfinder: WEBER, Marian, 76131 Karlsruhe (DE); WECKENMANN, Niklas, 76437 Rastatt (DE)
(74) Vertreter: Ter Meer Steinmeister & Partner
(86) Internationale Anmeldenummer: PCT/EP2021/074726
(87) Internationale Veröffentlichungsnummer: WO 2022/053526

(56) Entgegenhaltungen:
- DE-A1- 102017 205 713
- DE-A1- 102018 129 441
- DE-A1- 102019 000 457

## Beschreibung

### Gebiet der Erfindung

Die vorliegende Erfindung betrifft ein Verfahren zur Zustandsüberwachung eines Laserbearbeitungskopfes und ein Laserbearbeitungssystem mit einem Laserbearbeitungskopf, welches eingerichtet ist, das Verfahren durchzuführen. Die vorliegende Erfindung betrifft insbesondere ein Verfahren zur Zustandsüberwachung eines Laserbearbeitungskopfes und von Elementen, insbesondere optischen Elementen, des Laserbearbeitungskopfes mithilfe von Modellen bzw. Algorithmen des maschinellen Lernens.

### Hintergrund und Stand der Technik

In einem Laserbearbeitungssystem, auch als Laserbearbeitungsanlage oder Lasermaschine bezeichnet, zum Bearbeiten eines Werkstücks mittels eines Laserstrahls wird der von einer Laserlichtquelle oder einem Ende einer Laserleitfaser austretende Laserstrahl mit Hilfe einer Strahlführungs- und Fokussieroptik auf das zu bearbeitende Werkstück fokussiert oder gebündelt, um das Werkstück lokal in einem Bearbeitungsbereich auf Schmelztemperatur zu erhitzen. Das Bearbeiten kann ein Trennen von Werkstücken, beispielsweise ein Laserschneiden, oder ein Fügen, d.h. ein dauerhaftes Verbinden von Werkstücken, insbesondere ein Laserschweißen, Laserauftragsschweißen oder Laserlöten, umfassen. Das Laserbearbeitungssystem umfasst für gewöhnlich einen Laserbearbeitungskopf zum Einstrahlen des Laserstrahls auf das Werkstück, der die Strahlführungs- und Fokussieroptik und weitere Elemente umfasst.

Elemente und Komponenten des Laserbearbeitungskopfes, insbesondere optische Elemente zur Strahlführung bzw. -fokussierung, können im gewerblichen Einsatz mit Schmutz verunreinigt werden und/oder sich durch Abnutzungs- und/oder Alterungseffekte verschlechtern. Aufgrund dieser Veränderungen kann sich die Absorption des Laserstrahls durch die Elemente verändern, insbesondere erhöhen, sodass eine gewünschte Leistungsfähigkeit des Laserbearbeitungssystems nicht mehr erreicht wird. Ferner erfährt der Laserstrahl durch die erhöhte Absorption eine Abweichung seiner Fokuslage zu einer für den Prozess gewünschten Referenzfokuslage, d.h. zu einer Soll-Fokuslage. Dieser Effekt wird auch als "dynamischer Fokusshift" bezeichnet. Der dynamische Fokusshift kann zu einer Verschlechterung des Laserbearbeitungsprozesses bzw. des Bearbeitungsergebnisses führen. Beim Laserstrahlschneiden kann sich dies beispielsweise in einer schlechten Schnittkantenqualität, d.h. in einer hohen Rauigkeit, Schlackenbildung, Verbrennungsartefakte und/oder Bartbildung an der Schnittunterkante bis hin zum Schnittabriss, äußern, was einen Herstellungsprozess und die Produktion laserbearbeiteter Materialien und Werkstücke, insbesondere durch verzögerte Produktionszeiten und ungeplantem Materialausschuss, erheblich beeinträchtigen kann. Des Weiteren birgt die Absorption des Laserstrahls durch Komponenten oder optische Elemente, insbesondere durch Linsen der Strahlführungs- und/oder der Fokussieroptik oder Schutzgläsern, die Gefahr einer irreparablen Beschädigung des Laserbearbeitungskopfes. Eine frühzeitige Erkennung oder Vorhersage einer Verunreinigung und/oder Verschlechterung des optischen Systems und von optischen Elementen des Laserbearbeitungskopfes kann diese negativen Folgeerscheinungen verhindern.

In DE 10113518 B4 erfolgt die Messung einer Verschmutzung eines Schutzglases durch Vergleich von Temperatur- und Streulichtwerten mit Referenzwerten, um ein Fehlersignal zu erzeugen, wenn die Referenzwerte überschritten werden. Die Temperatur- und Streulichtwerte sind trotz des Vergleichs mit Referenzwerten nicht immer aussagekräftig und müssen mit zusätzlichen Randbedingungen, z.B. der aktuellen Laserleistung, der Umgebungstemperatur etc., in Relation gesetzt werden. Die Interpretation der Zusammenhänge erfordert Expertenwissen und ist nicht intuitiv aus den gemessenen Werten ersichtlich.

Die Auswertung von Messdaten mit Hilfe von klassischer Signalverarbeitung, beispielsweise durch eine Kurvenanalyse, durch Vergleich mit empirisch festgelegten Schwellwerten oder durch eine Fouriertransformation, bietet oft keine aussagekräftige Einschätzung des Zustands eines Schutzglases, da Randbedingungen wie Umgebungstemperaturen oder die aktuell anliegende Laserleistung oft nicht ausreichend berücksichtigt werden (können). Aufgrund der wenig komplexen Auswertung anhand von Schwellwerten kann hier allenfalls nur von einem Indikator gesprochen werden.

Für gewöhnlich sind zur Überwachung eines Zustands des Laserbearbeitungskopfes, insbesondere des Schutzglases, Hilfsmittel oder zusätzliche Vorrichtungen erforderlich oder es muss ein separater Testaufbau für die Überprüfung von optischen Elementen bereitgestellt werden. Somit kann die Überprüfung nicht direkt im Ausgangszustand oder im Aufbau der Laserbearbeitungsanlage selbst erfolgen, was zu Verzögerungen bei der Produktion führt. Wenn Elemente aus dem Laserbearbeitungskopf zur Überprüfung ausgebaut werden müssen, ergibt sich zudem ein erhöhtes Verschmutzungsrisiko.

Typischerweise werden nur einzelne Elemente oder Komponenten eines Laserbearbeitungskopfes untersucht. Damit kann eine Aussage darüber getroffen werden, ob eine Komponente ausfällt oder degradiert, aber nicht wie der Gesamtzustand des Laserbearbeitungskopfes ist. Beispielsweise kann der Laserbearbeitungskopf bei einer leichten Degradierung eines Schutzglases, welches an einer Düsenöffnung des Laserbearbeitungskopfes in der Nähe des Bearbeitungsbereichs angeordnet ist, noch benutzt werden. Wenn jedoch optische Elemente wie die Fokussierlinse beeinträchtigt sind, ist eine weitere Verwendung nicht zu empfehlen oder unmöglich.

Im derzeitigen Stand der Technik werden lediglich optische Komponenten überwacht. Der Einfluss einer Degradierung oder eines Ausfalls mechanischer und elektrischer Komponenten, wie z.B. Motoren oder Sensor- und Steuerplatinen, werden im Rahmen der Zustandsüberwachung eines Laserbearbeitungskopfes nicht berücksichtigt.

DE 10 2019 000 457 A1, die die Grundlage für den Oberbegriff der unabhängigen Ansprüche bildet, betrifft eine maschinelle Lernvorrichtung, die über eine Steuereinheit der Laservorrichtung eine Zustandsvariable des Inneren und des Äußeren einer Laservorrichtung beobachtet, die Zeitreihendaten der Lichtleistung, die durch einen Ausgangslichtsensor detektiert wird, und einen Lichtausgabebefehl umfasst, und ein Bestimmungsergebnis der Richtigkeit mit Bezug auf ein quantitatives Prinzip für das Auftreten von Fehlern erfasst, das für jeden Fehler in der Laservorrichtung ausgegeben wird. Die maschinelle Lernvorrichtung lernt das quantitative Prinzip für das Auftreten von Fehlern, der jedem Fehler entspricht, und verknüpft dabei das quantitative Prinzip für das Auftreten von Fehlern mit der Zustandsvariablen und dem Bestimmungsergebnis der Richtigkeit mit Bezug auf das quantitative Prinzip für das Auftreten von Fehlern, und entscheidet über ein quantitatives Prinzip für das Auftreten von Fehlern, das ausgegeben werden soll, wenn ein Auftreten jedes Fehlers detektiert wird.

DE 10 2018 129 441 A1 betrifft ein System zur Überwachung eines Laserbearbeitungsprozesses zur Bearbeitung eines Werkstücks umfassend: eine Recheneinheit, die eingerichtet ist, basierend auf aktuellen Daten des Laserbearbeitungsprozesses einen Eingangstensor zu bestimmen und basierend auf dem Eingangstensor mittels einer Übertragungsfunktion einen Ausgangstensor zu bestimmen, der Informationen über ein aktuelles Bearbeitungsergebnis enthält, wobei die Übertragungsfunktion zwischen dem Eingangstensor und dem Ausgangstensor durch ein angelerntes neuronales Netz gebildet ist.

### Zusammenfassung der Erfindung

Es ist eine Aufgabe der vorliegenden Erfindung, ein Verfahren zur Zustandsüberwachung eines Laserbearbeitungskopfes und/oder von zumindest einem Element, insbesondere einem optischen Element, einem mechanischen Element, einem elektrischen Element oder einem elektronischen Element, des Laserbearbeitungskopfes anzugeben, sowie ein Laserbearbeitungssystem zum Durchführen desselben. Es ist ferner eine Aufgabe der vorliegenden Erfindung, ein Verfahren sowie ein Laserbearbeitungssystem zum Durchführen desselben anzugeben, welches eine einfache und schnelle Zustandsüberwachung im einsatzbereiten Aufbau des Laserbearbeitungskopfes, d.h. ohne Ausbau des zumindest einen Elements, ermöglicht.

Es ist weiter eine Aufgabe der vorliegenden Erfindung, ein Verfahren zur Zustandsüberwachung sowie ein Laserbearbeitungssystem zum Durchführen desselben anzugeben, welches ermöglicht, ein Ergebnis der Zustandsüberwachung, insbesondere einen geschätzten aktuellen Zustand, an einen Bediener des Laserbearbeitungskopfes auszugeben. Es ist ferner eine Aufgabe der vorliegenden Erfindung, ein Verfahren sowie ein Laserbearbeitungssystem zum Durchführen desselben anzugeben, welches ermöglicht, basierend auf dem Ergebnis der Zustandsüberwachung eine Handlungsempfehlung an den Bediener auszugeben.

Es ist ferner eine Aufgabe der vorliegenden Erfindung, ein Verfahren zur Zustandsüberwachung sowie ein Laserbearbeitungssystem zum Durchführen desselben anzugeben, welches ermöglicht, für eine vorgegebene Konfiguration eines Laserbearbeitungskopfes oder für einen vorgegebenen Laserbearbeitungskopf ein feinabgestimmtes Verfahren durchzuführen.

Eine oder mehrere dieser Aufgaben werden durch den Gegenstand der unabhängigen Ansprüche gelöst. Vorteilhafte Ausführungsformen und Weiterentwicklungen sind Gegenstand der entsprechenden abhängigen Ansprüche.

Die Erfindung beruht auf dem Gedanken, für eine Zustandsüberwachung eines Laserbearbeitungskopfes eine Zustandsbestimmung des Laserbearbeitungskopfes oder zumindest eines Elements davon, insbesondere von zumindest einem optischen Element, mit Hilfe von Modellen bzw. Algorithmen des maschinellen Lernens (MI,-Modell bzw. ML-Algorithmus) basierend auf Messdaten, beispielsweise von Streulicht-, Temperatur- und/oder Drucksensoren im Laserbearbeitungskopf, Prozessparametern und/oder Maschinendaten durchzuführen. Basierend auf dem bestimmten Zustand des Laserbearbeitungskopfes oder eines Elements davon können einem Bediener Maßnahmen- bzw. Handlungsempfehlungen gegeben werden. Der jeweilige Zustand kann basierend auf Messdaten von mindestens einer Sensoreinheit bestimmt werden, die im oder am Laserbearbeitungskopf angeordnet ist, und einen Streulicht-, Temperatur- und/oder Drucksensor umfassen kann. Ferner können weitere Prozessdaten und Umgebungseinflüsse, beispielsweise eine Umgebungslufttemperatur und/oder eine Umgebungsluftfeuchtigkeit, berücksichtigt werden.

Gemäß einem ersten Aspekt der vorliegenden Erfindung ist ein Verfahren zur Zustandsüberwachung eines Laserbearbeitungskopfes angegeben, das Verfahren umfassend die Schritte: Erfassen von Messdaten durch zumindest eine an oder innerhalb des Laserbearbeitungskopfes angeordnete Sensoreinheit, Bestimmen eines Eingangsvektors basierend auf den erfassten Messdaten; und Bestimmen eines Ausgangsvektors durch Anwenden eines durch maschinelles Lernen trainierten Modells (ML-Modell) auf den Eingangsvektor, wobei der Ausgangsvektor geschätzte Zustandsdaten von zumindest zwei Elementen des Laserbearbeitungskopfes und/oder des Laserbearbeitungskopfes, vorzugsweise zur Bestimmung bzw. zur Beurteilung des Gesamtzustands des Laserbearbeitungskopfes, enthält.

Anstatt eines Eingangsvektors kann auch ein Eingangstensor bestimmt werden. In diesem Fall wird entsprechend auch ein Ausgangstensor anstatt eines Ausgangsvektors bestimmt. In anderen Worten kann jede hierin beschriebene Ausführungsform, die einen Eingangsvektor aufweist, stattdessen auch einen Eingangstensor umfassen. Gleiches gilt entsprechend für den Ausgangsvektor und den Ausgangstensor.

Messdaten können einen zeitlichen Verlauf verschiedener Messgrößen umfassen, und/oder können einzelne Werte der Messgrößen umfassen. Die Messdaten können während eines Laserbearbeitungsprozesses oder eines Prüfzyklus gemessene oder erfasste Werte der jeweiligen Messgrößen sein. Diese Werte können den zeitlichen Verlauf der jeweiligen Messgrö-βe abbilden.

Die Messdaten können zeitliche Verläufe und/oder Werte von zumindest einer der folgenden Messgrößen umfassen: eine Feuchtigkeit, eine Luftfeuchtigkeit in einem Innenraum des Laserbearbeitungskopfes, eine Luftfeuchtigkeit einer Umgebung des Laserbearbeitungskopfes, eine Temperatur, eine Temperatur einer Umgebung des Laserbearbeitungskopfes, eine Temperatur eines Gehäuses des Laserbearbeitungskopfes, eine Temperatur in einem Innenraum des Laserbearbeitungskopfes, eine Temperatur eines Elements des Laserbearbeitungskopfes, eine Kühlflüssigkeitstemperatur, eine Temperaturstrahlungsintensität, eine Strahlungsintensität, eine Streulichtintensität, eine Intensität einer von einem Element des Laserbearbeitungskopfes zurückgestrahlten und/oder gestreuten Strahlung, eine Intensität von Streulicht in einem Innenraum des Laserbearbeitungskopfes, eine Intensität von Streulicht eines optischen Elements, elektrische Ströme von oder zu einem Element, elektrische Spannungen an einem Element, Kommunikationssignale eines Elements, einen Gasdruck in einem Innenraum des Laserbearbeitungskopfes, einen Gasdruck zwischen zwei optischen Elementen und/oder auf ein optisches Element, eine Beschleunigung eines Elements des Laserbearbeitungskopfes und/oder des Laserbearbeitungskopfes, und eine Vibration eines Elements des Laserbearbeitungskopfes und/oder des Laserbearbeitungskopfes.

Das Bestimmen des Eingangsvektors kann ferner basierend auf zumindest einem Prozessparameter oder auf Prozessdaten erfolgen. Prozessdaten können einen zeitlichen Verlauf verschiedener Prozessparameter umfassen, und/oder können einzelne Werte der Prozessparameter umfassen. Die Prozessdaten können gemessen oder erfasst werden oder, beispielsweise durch die Anlagensteuerung oder den Bediener, vorgegeben sein. Die Prozessdaten können während eines Laserbearbeitungsprozesses oder eines Prüfzyklus gemessene oder erfasste Werte der jeweiligen Prozessparameter umfassen. Diese Werte können den zeitlichen Verlauf des jeweiligen Prozessparameters abbilden. Die Prozessparameter können Laserparameter, Bearbeitungsparameter, und/oder Umgebungsparameter umfassen. Die Laserparameter können Parameter einer Laserquelle zum Erzeugen des Laserstrahls umfassen, beispielsweise eine aktuelle Laserleistung, eine Pulsspitzenleistung, eine Pulslänge, eine Pulsfrequenz, eine Wellenlänge, ein Strahlparameterprodukt und/oder einen Faserdurchmesser. Die Bearbeitungsparameter können eine Fokuslage des Laserstrahls, einen Gasdruck, eine Vorschubgeschwindigkeit des Laserbearbeitungskopfes, eine Gasart (z.B. Stickstoff, Sauerstoff, Druckluft, etc.), einen Düsentyp, einen Düsendurchmesser, ein Abbildungsverhältnis des optischen Systems, eine aktuelle Beschleunigung des Laserbearbeitungskopfes, einen Abstand des Laserbearbeitungskopfes von einem zu bearbeitenden Werkstück und/oder Aktuatordaten des Laserbearbeitungskopfes und/oder anderer Maschinenkomponenten umfassen. Die Umgebungsparameter können eine Umgebungslufttemperatur und/oder eine Umgebungsluftfeuchtigkeit umfassen. Die Vorschubgeschwindigkeit kann eine Geschwindigkeit des Laserbearbeitungskopfes relativ zu einem zu bearbeitenden Werkstück bezeichnen.

Der Zustand des Laserbearbeitungskopfes bzw. einzelner Elemente davon kann durch zumindest eine Zustandsgröße angegeben bzw. beschrieben sein. Die Zustandsgröße kann mehrere Werte, auch "Zustandswerte" genannt, annehmen. Die Zustandswerte einer oder mehrerer Zustandsgrößen bilden die Zustandsdaten. Der Zustand des Laserbearbeitungskopfes bzw. einzelner Elemente davon kann also durch entsprechende Zustandsdaten beschrieben oder repräsentiert sein.

Die Zustandsdaten können Daten über zumindest eines der folgenden umfassen: eine Art einer Verschmutzung eines Elements, einen Verschmutzungsgrad eines Elements, einen Abnutzungsgrad eines Elements, einen Alterungsgrad eines Elements, eine verbleibende Nutzungsdauer eines Elements, eine veränderte Brennweite eines Elements, eine Abweichung einer aktuellen Fokuslage des Laserstrahls (Ist-Fokuslage) von einer Soll-Fokuslage, und eine Angabe über die Funktionsfähigkeit des Laserbearbeitungskopfes.

Das Verfahren zur Zustandsüberwachung kann in einem funktionsbereiten Aufbau bzw. Zustand des Laserbearbeitungssystems durchgeführt werden. Mit anderen Worten bleibt das mindestens eine Element während des Verfahrens zur Zustandsüberwachung im Laserbearbeitungskopf eingebaut.

Das Verfahren zur Zustandsüberwachung kann insbesondere während eines Laserbearbeitungsprozesses durchgeführt werden. Der Laserbearbeitungsprozess kann ein Laserschneiden, Laserschweißen und/oder Laserauftragsschweißen umfassen. Der Ausgangsvektor kann in Echtzeit oder kontinuierlich während eines Laserbearbeitungsprozesses bestimmt werden. Die Schritte Erfassen von Messdaten, Bestimmen des Eingangsvektors und Bestimmen des Ausgangsvektors können kontinuierlich, wiederholt und parallel, insbesondere zeitlich parallel durchgeführt werden.

Alternativ kann das Verfahren während eines Prüfzyklus durchgeführt werden, in dem zumindest ein Prozessparameter vorgegeben ist. Insbesondere kann der Ausgangsvektor während des Prüfzyklus bestimmt werden. Dadurch kann eine Genauigkeit der geschätzten aktuellen Zustandsdaten erhöht werden. Der Prüfzyklus kann vorgegebene Zeitverläufe für mindestens einen Prozessparameter, etwa Laserleistung, Fokuslage und/oder Gasdruck, und/oder mit mindestens einem vorgegebenen konstanten Prozessparameter, etwa Laserleistung, Fokuslage und/oder Gasdruck, enthalten. Der Prüfzyklus kann mit oder ohne Werkstück durchgeführt werden. Im ersten Fall kann der Prüfzyklus als Laserbearbeitungsprozess mit vorgegebenen Zeitabläufen für mindestens einen Prozessparameter, etwa Laserleistung, Fokuslage und/oder Gasdruck, und/oder mit mindestens einem vorgegebenen konstanten Prozessparameter, etwa Laserleistung, Fokuslage und/oder Gasdruck, durchgeführt werden. Beispielsweise kann während des Prüfzyklus eine Fokuslage des Laserstrahls so eingestellt werden, dass mindestens ein optisches Element des Laserbearbeitungskopfes, insbesondere eine Fokussierlinse, eine Kollimationslinse, ein Strahlteiler oder ein Schutzglas, maximal ausgeleuchtet wird. Zusätzlich kann während des Prüfzyklus die Fokuslage des Laserstrahls so eingestellt werden, dass das mindestens eine optische Element minimal ausgeleuchtet wird, d.h. dass das mindestens eine optische Element im Fokus liegt. Eine Laserleistung während des Prüfzyklus kann konstant sein. Der Laserbearbeitungskopf kann während des Prüfzyklus mit einem Gasdruck, der größer als ein Umgebungsdruck ist, beaufschlagt werden. Das Erfassen der Messdaten, das Bestimmen des Eingangsvektors und/oder das Bestimmen des Ausgangsvektors können während eines Laserbearbeitungsprozesses und/oder des Prüfzyklus durchgeführt werden. Das Beaufschlagen des Laserbearbeitungskopfes mit dem Gasdruck und/oder das Einstellen der Fokuslage kann durch die nachfolgend beschriebene Recheneinheit erfolgen oder durch diese gesteuert werden.

Das Verfahren kann ferner einen automatisierten Eingriff bzw. ein Regeln des Laserbearbeitungsprozesses basierend auf dem bestimmten Ausgangsvektor umfassen. Das Regeln des Laserbearbeitungsprozesses kann durch Ändern von zumindest einem Prozessparameter erfolgen, beispielsweise der Laserleistung, der Fokuslage des Laserstrahls, des Gasdrucks, der Vorschubgeschwindigkeit des Laserbearbeitungskopfes, des Abbildungsverhältnisses oder des Abstands des Laserbearbeitungskopfes zum Werkstück. Das Regeln kann dazu dienen, um einen gewünschten Soll-Zustand (wieder)herzustellen oder um ein gewünschtes Bearbeitungsergebnis des Laserbearbeitungsprozesses sicherzustellen.

Das zumindest eine Element kann ein optisches Element, insbesondere ein Schutzglas, einen Strahlteiler, einen Spiegel, eine Linse, eine Linsengruppe, ein Linsenpaket, eine Fokussierlinse, eine Fokussieroptik, eine Kollimationsoptik und/oder eine Kollimationslinse umfassen. Das zumindest eine Element kann ein mechanisches Element, insbesondere einen Aktuator, ein Motor, eine Düse, eine Düsenelektrode, ein Keramikteil, eine Schneidgasführung, oder ein Kühlelement, umfassen. Das zumindest eine Element kann ferner ein elektrisches und/oder elektronisches Element, insbesondere eine Platine, eine Steuerplatine, eine Kommunikationsplatine, ein Leistungsbauteil, oder eine Motorsteuerung umfassen.

Das Bestimmen des Ausgangsvektors kann das Bestimmen von geschätzten Zustandsdaten der zumindest zwei Elemente des Laserbearbeitungskopfes durch Anwenden des durch maschinelles Lernen trainierten Modells auf den Eingangsvektor und das Bestimmen von geschätzten Zustandsdaten des Laserbearbeitungskopfes durch Anwenden des durch maschinelles Lernen trainierten Modells auf die geschätzten Zustandsdaten der zumindest zwei Elemente umfassen. Dementsprechend kann der Ausgangsvektor geschätzte Zustandsdaten der zumindest zwei Elemente des Laserbearbeitungskopfes und/oder geschätzte Zustandsdaten des Laserbearbeitungskopfes umfassen.

Erfindungsgemäß umfasst das durch maschinelles Lernen trainierte Modell eine Vielzahl von ersten Modellen zum Bestimmen von Zustandsdaten von jeweils einem Element des Laserbearbeitungskopfes, insbesondere von jedem der zumindest zwei Elemente, sowie ein zweites ganzheitliches Modell, das aus den von den ersten Modellen erhaltenen Zustandsdaten der Elemente einen Zustand bzw. Zustandsdaten des Laserbearbeitungskopfes bestimmt. Mit anderen Worten kann zum Bestimmen von Zustandsdaten von jeweils einem Element des Laserbearbeitungskopfes für jedes Element ein erstes Modell vorliegen. Alternativ kann zum Bestimmen von Zustandsdaten von dem mindestens einen Element des Laserbearbeitungskopfes für jede Art von Element, d.h. für mechanische Elemente, für elektrische Elemente, oder für optische Elemente, ein erstes Modell vorliegen. Die von dem zumindest einem ersten Modell bestimmten Zustandsdaten von dem zumindest einen Element können Eingangsdaten oder einen Eingangsvektor für das zweite Modell zum Bestimmen von Zustandsdaten des Laserbearbeitungskopfes bestimmen. Das zweite Modell kann eingerichtet sein, die Zustandsdaten von mehreren ersten Modellen zu gewichten, um die Zustandsdaten des Laserbearbeitungskopfes zu bestimmen.

Demnach kann das Bestimmen des Ausgangsvektors das Bestimmen von geschätzten Zustandsdaten der zumindest zwei Elemente des Laserbearbeitungskopfes durch Anwenden von entsprechenden ersten Modellen für jedes der zumindest zwei Elemente auf den Eingangsvektor und das Bestimmen von geschätzten Zustandsdaten des Laserbearbeitungskopfes durch Anwenden des zweiten, ganzheitlichen Modells auf die geschätzten Zustandsdaten der zumindest zwei Elemente umfassen.

Das Modell, bzw. das erste Modell und das zweite Modell, können auf zumindest einem der folgenden Algorithmen oder einer Kombination daraus basieren: Random Forest, Support Vector Machine, Fuzzy Logic, Fuzzy Decision Tree, einem Entscheidungsbaum, einem neuronalen Netz, einem rekurrenten neuronalen Netz, einem faltenden neuronalen Netz und einem tiefen faltenden neuronalen Netz. Bei den tiefen faltenden neuronalen Netzen können schichtweise trennbare Faltungen mit residualen Verbindungen und/oder Squeeze-and-Excitation Schichten verwendet werden. Bei allen faltenden neuronalen Netzen können parallele und/oder sequenzielle Pfade durch lange Kurzzeitgedächtnis-Strukturen (Long shortterm memory - LSTM) ergänzt werden.

Das Modell kann für Transfer Learning eingerichtet und/oder für verstärkendes Lernen adaptierbar ist sein. Beispielsweise kann das Modell jeweils für einen individuellen Laserbearbeitungskopf, d.h. für ein vorliegendes Exemplar des Laserbearbeitungskopfes und/oder ein individuelles Element davon, d.h. für ein vorliegendes Exemplar des Elements, individuell trainiert sein. Dadurch kann das jeweilige ML-Modell auf einen vorgegebenen Laserbearbeitungskopf oder ein vorgegebenes Element feinabgestimmt werden (Parameter-Feinabstimmung). Das Transfer Learning kann sowohl überwacht als auch unüberwacht durchgeführt werden. Die Parameter-Feinabstimmung kann in Kombination mit verstärkendem Lernen (Reinforcement Learning) durchgeführt werden. So kann beispielsweise eine sehr starke Temperatursteigung bei unverhältnismäßiger Verschleißklassifikation durch das Ursprungsmodell eine negative Belohnung bedeuten und dementsprechend ein erneutes Lernen mit anderen Parametern begünstigen.

Das Verfahren kann ein Ausgeben des Ausgangsvektors an einen (menschlichen) Bediener des Laserbearbeitungskopfes, z.B. mittels einer Benutzerschnittstelle, umfassen. Das Verfahren kann ein Ausgeben von zumindest einer Handlungsempfehlung an den Benutzer des Laserbearbeitungskopfes umfassen. Das Ausgeben des Ausgangsvektors und/oder das Ausgeben der Handlungsempfehlungen kann grafisch, beispielsweise in Form von Piktogrammen, Symbolen, Text etc., über eine Benutzerschnittstelle erfolgen. Dadurch kann der komplexe Zusammenhang zwischen den Messdaten und dem Zustand von Elementen des Laserbearbeitungskopfes für einen Bediener verständlich interpretierbar ausgegeben werden. Beispielsweise können die Zustände in Form eines Ampelsystems ausgegeben werden. Die Ampelfarben "rot", "gelb", "grün" können entsprechenden Zuständen des Laserbearbeitungskopfs oder des jeweiligen Elements entsprechen. Ferner kann eine Schätzung des dynamischen Fokusshifts, d.h. einer Abweichung der Ist-Fokuslage des Laserstrahls gegenüber einer Soll-Fokuslage, und/oder eine Zeitangabe über die verbleibende Nutzungsdauer einzelner Elemente oder des Laserbearbeitungskopfes als Ganzes ausgegeben werden.

Das Verfahren kann ein Vorverarbeiten der Messdaten und/oder der Prozessdaten mittels Interpolation und/oder Glättung und/oder Filterung umfassen.

Gemäß einem weiteren Aspekt der vorliegenden Erfindung ist ein Laserbearbeitungssystem zum Durchführen eines Laserbearbeitungsprozesses angegeben, das Laserbearbeitungssystem umfassend: einen Laserbearbeitungskopf mit zumindest einer Sensoreinheit zum Erfassen von Messdaten, die an oder innerhalb eines Gehäuses des Laserbearbeitungskopfs angeordnet ist, und eine Recheneinheit, die eingerichtet ist, basierend auf den erfassten Messdaten einen Eingangsvektor zu bestimmen, und durch Anwenden eines durch maschinelles Lernen trainierten Modells auf den Eingangsvektor einen Ausgangsvektor zu bestimmen, der geschätzte Zustandsdaten des Laserbearbeitungskopfes und/oder von zumindest einem Element des Laserbearbeitungskopfes enthält. Das Laserbearbeitungssystem kann ferner eine Steuerung umfassen. Die Recheneinheit kann in der Steuerung integriert sein oder separat vorgesehen sein. Das Laserbearbeitungssystem, insbesondere eine Steuerung oder die Recheneinheit davon, kann eingerichtet sein, um ein Verfahren zur Zustandsüberwachung gemäß irgendeiner in dieser Offenbarung beschriebenen Ausführungsformen durchzuführen.

Der zumindest eine Sensor kann ausgewählt sein aus der Gruppe, die enthält: einen Feuchtigkeitssensor, einen Temperatursensor, einen Photodetektor, eine Photodiode, einen Drucksensor, und einen Streulichtsensor, einen Beschleunigungssensor, einen Stromsensor, einen Spannungssensor, einen Abstandssensor, einen Schallsensor, einen Vibrationssensor.

Gemäß einer Ausführungsform ist der Laserbearbeitungskopf als Laserschneidkopf, als Laserauftragsschweißkopf oder als Laserschweißkopf ausgebildet.

Gemäß einer Ausführungsform umfasst der Laserbearbeitungskopf zumindest einen oder alle der folgenden Sensoren: einen Sensor zum Messen von Streulicht eines ersten Schutzglases (bzw. eines ersten Schutzglaspakets), einen Sensor zum Messen von Streulicht einer Kollimierlinse (bzw. eines Kollimierlinsenpakets), einen Sensor zum Messen einer Temperatur der Kollimierlinse, einen Sensor zum Messen von Streulicht in einem Innenraum des Laserbearbeitungskopfes, einen Sensor zum Messen einer Feuchtigkeit im Innenraum des Laserbearbeitungskopfes, einen Sensor zum Messen von Streulicht der Fokussierlinse, einen Sensor zum Messen einer Temperatur der Fokussierlinse, einen Sensor zum Messen einer Temperatur eines zweiten Schutzglases (bzw. eines zweiten Schutzglaspakets), einen Sensor zum Messen von Streulicht eines dritten Schutzglases (bzw. eines dritten Schutzglaspakets), einen Sensor zum Messen von einer Temperatur des dritten Schutzglases, einen Sensor zum Messen eines Drucks, insbesondere eines Schneidgasdrucks, zwischen dem zweiten Schutzglas und dem dritten Schutzglas, d.h. zwischen dem letzten und dem vorletzten Schutzglas (bzw. Schutzglaspaket), und einen Sensor zum Messen eines Schneidgasdrucks, insbesondere zwischen einem letzten Schutzglas und einer Austrittsöffnung des Laserbearbeitungskopfs. Das erste Schutzglas (bzw. Schutzglaspaket) kann zwischen einer Kopplungsöffnung zum Einkoppeln des Laserstrahls in den Bearbeitungskopf und einer Fokussieroptik liegen. Das zweite Schutzglas (bzw. Schutzglaspaket) kann zwischen einer Kollimationsoptik und einer Austrittsöffnung des Laserbearbeitungskopfs liegen. Das dritte Schutzglas (bzw. Schutzglaspaket) kann zwischen dem zweiten Schutzglas (bzw. Schutzglaspaket) und einer Austrittsöffnung des Laserbearbeitungskopfs liegen. Mit Paket wird hier eine Einheit von mehreren optischen Elementen bezeichnet, beispielsweise eine Kassette mit zwei oder mehr Schutzgläsern.

Gemäß einer Ausführungsform umfasst der Laserbearbeitungskopf zumindest einen oder alle der folgenden Sensoren: einen Sensor zum Messen von Streulicht eines ersten und zweiten Schutzglases (bzw. Schutzglaspakets), einen Sensor zum Messen einer Temperatur einer Kollimierlinse (bzw. Kollimierlinsenpakets), einen Sensor zum Messen einer Temperatur eines Innenraums des Laserbearbeitungskopfes, einen Sensor zum Messen einer Feuchtigkeit im Innenraum, einen Sensor zum Messen einer Temperatur einer Fokussierlinse (bzw. Fokussierlinsenpakets), einen Sensor zum Messen einer Temperatur eines vierten und fünften Schutzglases (bzw. Schutzglaspakets), einen Sensor zum Messen eines Drucks insbesondere eines Schneidgasdrucks, zwischen dem vierten Schutzglas (bzw. Schutzglaspakets) und dem fünften Schutzglas (bzw. Schutzglaspakets), und einen Sensor zum Messen eines Schneidgasdrucks, insbesondere zwischen einem letzten Schutzglas und einer Austrittsöffnung des Laserbearbeitungskopfs. Der Laserbearbeitungskopf kann ferner ein drittes Schutzglas oder Schutzglaspaket umfassen. Die Nummerierung erfolgt gemäß der Reihenfolge in Laserstrahlausbreitungsrichtung.

Das Laserbearbeitungssystem kann weitere Elemente, beispielsweise eine Steuerung bzw. Anlagensteuerung zum Steuern des Laserbearbeitungssystems oder Elementen davon, etwa von Aktuatoren, Maschinen, Roboter, etc. des Laserbearbeitungssystems, und/oder zum Steuern des Laserbearbeitungsprozesses umfassen.

### Kurzbeschreibung der Zeichnungen

Ausführungsformen der vorliegenden Erfindung werden im Folgenden anhand der Figuren im Detail beschrieben.
Fig. 1 zeigt schematisch ein allgemeines Konzept zum besseren Verständnis des Verfahrens zur Zustandsüberwachung eines Laserbearbeitungskopfes gemäß Ausführungsformen der vorliegenden Erfindung;
Fig. 2 zeigt eine schematische Ansicht eines Verfahrens zur Zustandsüberwachung eines Laserbearbeitungskopfes gemäß Ausführungsformen der vorliegenden Erfindung;
Fig. 3a bis 3d zeigen schematische Querschnittsansichten eines Laserbearbeitungskopfs und von Sensoren für Verfahren zur Zustandsüberwachung gemäß Ausführungsformen der vorliegenden Erfindung;
Fig. 4 zeigt schematisch ein Konzept zum besseren Verständnis eines Verfahrens zum Trainieren eines ML-Modells für Verfahren zur Zustandsüberwachung eines Laserbearbeitungskopfes gemäß Ausführungsformen der vorliegenden Erfindung;
Fig. 5 zeigt ein Ablaufdiagramm eines Verfahrens zum Trainieren eines ML-Modells für Verfahren zur Zustandsüberwachung eines Laserbearbeitungskopfes gemäß Ausführungsformen der vorliegenden Erfindung;
Fig. 6 zeigt schematisch einen beispielhaften Ablauf zum Trainieren eines ML-Modells für Verfahren zur Zustandsüberwachung eines Laserbearbeitungskopfes gemäß Ausführungsformen der vorliegenden Erfindung;
Fig. 7 zeigt schematisch ein Konzept zum besseren Verständnis des Verfahrens zur Zustandsüberwachung und Zustandsdarstellung eines Laserbearbeitungskopfes gemäß Ausführungsformen der vorliegenden Erfindung;
Fig. 8a zeigt schematisch den Ablauf eines Verfahrens zur Zustandsüberwachung eines Laserbearbeitungskopfes gemäß Ausführungsformen der vorliegenden Erfindung;
Fig. 8b zeigt schematisch den Ablauf eines Verfahrens zur Zustandsüberwachung eines Laserbearbeitungskopfes in einem Prüfzyklus gemäß Ausführungsformen der vorliegenden Erfindung;
Fig. 9 zeigt schematisch einen beispielhaften Ablauf zum Bestimmen von geschätzten aktuellen Zustandsgrößen anhand eines ML-Modells anhand von Verfahren zur Zustandsüberwachung eines Laserbearbeitungskopfes gemäß Ausführungsformen der vorliegenden Erfindung; und
Fig. 10 ist die schematische Darstellung eines Entscheidungsbaums, der eine Ausführungsform eines Algorithmus des maschinellen Lernens darstellt.

### Ausführliche Beschreibung der Ausführungsformen

Im Folgenden werden, sofern nicht anders vermerkt, für gleiche und gleichwirkende Elemente gleiche Bezugszeichen verwendet.

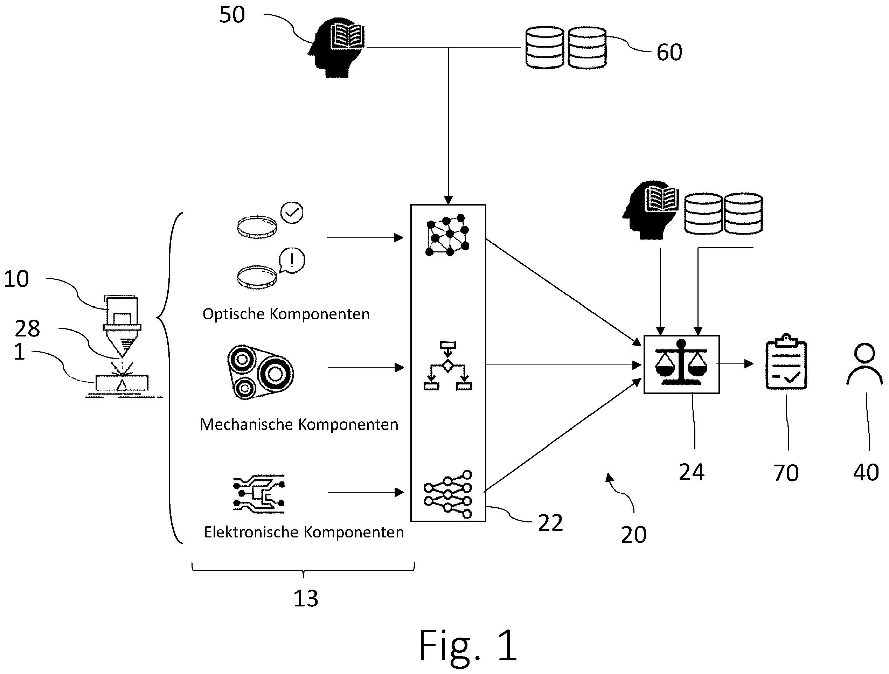

Fig. 1 zeigt schematisch ein Konzept zum besseren Verständnis des Verfahrens zur Zustandsüberwachung eines Laserbearbeitungskopfes gemäß Ausführungsformen der vorliegenden Erfindung.

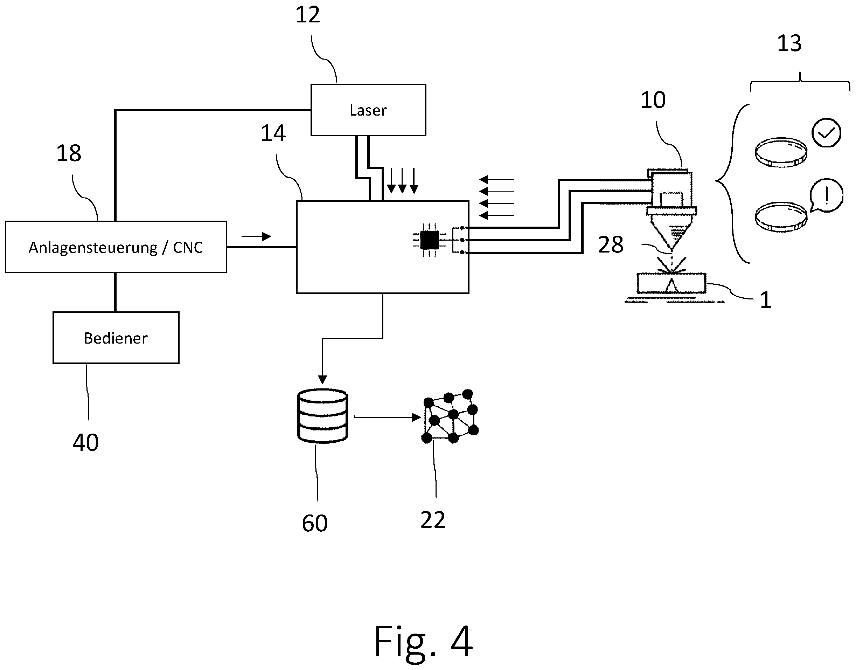

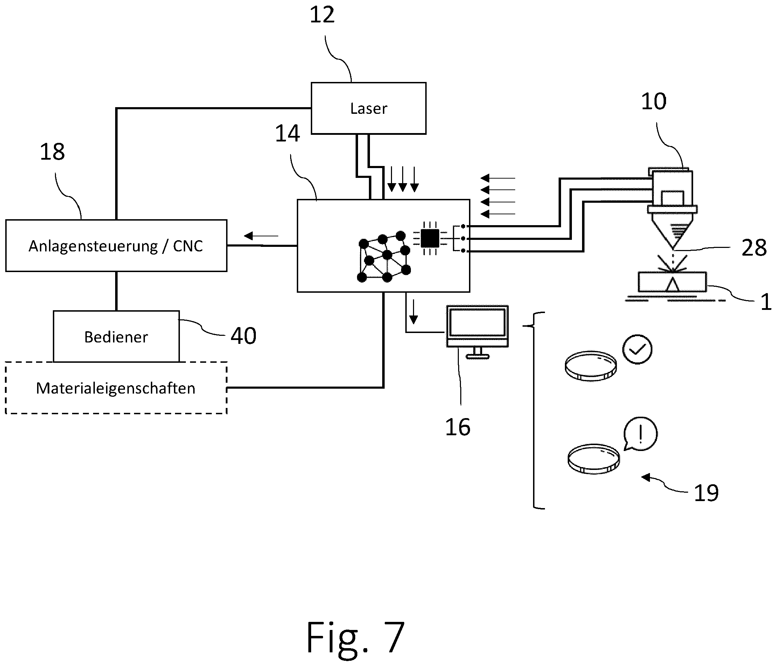

In einem Laserbearbeitungssystem zum Bearbeiten eines Werkstücks 1 mittels eines Laserstrahls wird der von einer Laserlichtquelle, oder kurz "Laser", 12 (siehe Fig. 4) erzeugte Laserstrahl 28 mit Hilfe einer Strahlführungs- und Fokussieroptik (nicht gezeigt) auf das zu bearbeitende Werkstück 1 fokussiert oder gebündelt, um das Werkstück 1 lokal auf Schmelztemperatur zu erhitzen. Das Bearbeiten kann ein Trennen von Werkstücken, beispielsweise ein Laserschneiden, und ein Fügen, d.h. ein dauerhaftes Verbinden von Werkstücken, insbesondere ein Laserschweißen, ein Laserauftragsschweißen oder Laserlöten, umfassen. Das Laserbearbeitungssystem umfasst einen Laserbearbeitungskopf 10 zum Einstrahlen des Laserstrahls auf das Werkstück 1 und kann weitere Elemente, beispielsweise einen Anlagenrechner 16 zur Interaktion mit einem Bediener, eine Anlagensteuerung 18 zum Steuern des Laserbearbeitungssystems, oder weitere Maschinen zum Bewegen des Laserbearbeitungskopfes 10 und/oder des Werkstücks 1 umfassen (siehe Fig. 4 bzw. Fig. 7).

Der Laserbearbeitungskopf, oder kurz "Bearbeitungskopf", 10 umfasst mehrere Elemente oder Module 13, auch "Bauteile" oder "Komponenten" genannt, insbesondere optische Elemente, mechanische Elemente, elektrische und/oder elektronische Elemente. Der Laserbearbeitungskopf 10 oder das Laserbearbeitungssystem kann ferner eine Recheneinheit 14 (siehe Fig. 4) zum Durchführen von Verfahren gemäß Ausführungsformen der vorliegenden Erfindung umfassen. Die Recheneinheit 14 ist in den Figuren getrennt von der Anlagensteuerung 18 dargestellt, die Erfindung ist aber nicht hierauf beschränkt. Beispielsweise können die Recheneinheit 14 und die Anlagensteuerung 18 in einer Einheit integriert sein.

Die optischen Elemente können Optiken, Linsen, Linsenpakete, Linsengruppen, Spiegel, Objektive, Schutzgläser, Kollimationslinsen, Fokussierlinsen etc. umfassen oder sein. Die elektronischen Elemente können Platinen, insbesondere Steuerplatinen, beispielsweise zur Motorsteuerung, und Kommunikationsplatinen, verstellbare Linse bzw. Linsenpakete umfassen oder sein. Die mechanischen Elemente können eine Antriebseinheit, beispielsweise für eine motorisch verstellbare Linse bzw. Linsenpaket, ein Motor, eine Düsenelektrode, ein Keramikteil, eine Schneidgasführung, Elemente zur Kühlung, beispielsweise mittels Wasser oder Luft, von Elementen oder Modulen, beispielsweise einer Blende, des Gehäuses des Laserbearbeitungskopfes 10, oder einer Düse etc. umfassen oder sein.

Verfahren gemäß Ausführungsformen dienen zur Überwachung des aktuellen, d.h. momentanen, Zustands des Laserbearbeitungskopfes 10 und/oder von einzelnen Elementen 13 davon. Dazu werden beispielsweise während des Lasermaterialbearbeitungsprozesses Messdaten mittels Sensoren oder Sensoreinheiten im oder am Laserbearbeitungskopf 10 erfasst. Die Messdaten umfassen den zeitlichen Verlauf verschiedener Messgrößen und/oder einzelne gemessene Werte der Messgrößen. Die Messgrößen können Temperaturen, Drücke, Streulicht oder Streulichtintensität, (Luft-)Feuchtigkeit, Beschleunigungen, elektrische Spannungen, elektrische Ströme sowie digitale Kommunikationssignale der optischen, mechanischen, elektrischen und/oder elektronischen Elemente umfassen.

Zusätzlich zu den Messdaten können für die Zustandsüberwachung weitere Daten des Laserbearbeitungsprozesses, auch "Prozessdaten" genannt, herangezogen werden. Die Prozessdaten umfassen beispielsweise zeitliche Verläufe verschiedener Prozessparameter und/oder einzelne Werte der Prozessparameter. Die Prozessparameter können Laserparameter, Bearbeitungsparameter, und/oder Umgebungsparameter umfassen. Die Laserparameter können Parameter einer Laserquelle zum Erzeugen des Laserstrahls umfassen, beispielsweise eine aktuelle Laserleistung, ein Strahlparameterprodukt, eine Pulsspitzenleistung, eine Pulslänge, eine Pulsfrequenz, eine Wellenlänge und/oder einen Faserdurchmesser. Die Bearbeitungsparameter können beispielsweise eine Soll-Fokuslage des Laserstrahls 28, einen Gasdruck, eine Gasart (z.B. Stickstoff, Sauerstoff, Druckluft, etc.), einen Düsentyp, einen Düsendurchmesser, ein Abbildungsverhältnis des optischen Systems, eine aktuelle Beschleunigung des Laserbearbeitungskopfes, eine Vorschubgeschwindigkeit des Laserbearbeitungskopfes 10, ein Abstand des Laserbearbeitungskopfes 10 von dem zu bearbeitenden Werkstück 1, Aktuatordaten des Laserbearbeitungskopfes 10 und anderer Maschinenkomponenten umfassen. Die Umgebungsparameter können eine Umgebungslufttemperatur und eine Umgebungsluftfeuchtigkeit umfassen.

Der Zustand des Laserbearbeitungskopfes 10 bzw. einzelner Elemente 13 desselben kann durch zumindest eine Zustandsgröße angegeben bzw. beschrieben sein. Die Zustandsgröße kann mehrere Zustandswerte annehmen. Die Zustandswerte einer oder mehrerer Zustandsgrößen bilden Zustandsdaten. Der Zustand des Laserbearbeitungskopfes 10 bzw. einzelner Elemente 13 desselben kann also durch entsprechende Zustandsdaten beschrieben oder repräsentiert sein.

Die Messdaten und ggf. Prozessdaten werden gemäß Ausführungsformen von einem vortrainierten Modell 20 des maschinellen Lernen, oder "Machine Learning", kurz "ML", verarbeitet bzw. analysiert, um den aktuellen Zustand des Laserbearbeitungskopfes 10 als Ganzes, im folgenden auch "gesamtheitlicher Zustand" oder "Gesamtzustand" genannt, und/oder um den Zustand einzelner oder mehrerer, beispielsweise zwei, Elemente 13 davon zu bestimmen. Diese bestimmten Zustände werden als geschätzte Zustände bezeichnet, da mittels des ML-Modells 20 eine Vorhersage oder Schätzung der Zustände erhalten werden kann. Die bestimmten Zustände können anschließend bewertet oder klassifiziert werden. Basierend auf den bestimmten Zuständen können einem menschlichen Bediener 40 Maßnahmen- und Handlungsempfehlungen 70 mitgeteilt werden. Das MI,-Modell 20 bzw. das gesamtheitliche ML-Modell 24 kann demnach für den Anwender oder Bediener 40 des Laserbearbeitungssystems bzw. des Laserbearbeitungskopfes 10 als Entscheidungssupport für eine Reparatur oder Wartung, Austausch von Elementen 13 etc. dienen.

Das ML-Modell 20 kann wie gezeigt ML-Modelle 22 für jedes Element des Laserbearbeitungskopfes 10, auch "elementspezifische" ML-Modelle oder erste Modelle genannt, und ein ML-Modell 24 für den Zustand des Laserbearbeitungskopfes 10, auch "ganzheitliches" oder "gesamtheitliches" ML-Modell oder zweites Modell genannt, umfassen. Das ML-Modell 20, die elementspezifischen ML-Modelle 22 und/oder das gesamtheitliche ML-Modell 24 kann beispielsweise auf einem der folgenden Algorithmen oder Methoden basieren: einem neuronalen Netz, einem rekurrenten neuronalen Netz, einem faltenden neuronalen Netz, einem tiefen faltenden neuronalen Netz, Random Forest, Support Vector Machine, Fuzzy Logic, einem Entscheidungsbaum, oder einer Kombination daraus (beispielsweise Fuzzy Decision Tree). Bei den tiefen faltenden neuronalen Netzen können schichtweise trennbare Faltungen mit residualen Verbindungen und/oder Squeeze-and-Excitation Schichten verwendet werden. Bei allen faltenden neuronalen Netzen können parallele und/oder sequenzielle Pfade durch lange Kurzzeitgedächtnis-Strukturen (LSTM) ergänzt werden.

Wie gezeigt können die ML-Modelle 20-24 jeweils basierend auf Expertenwissen und/oder Erfahrungswerten 50 und/oder basierend auf Mess- und Prozessdaten aus der Vergangenheit, d.h. auf dem sogenannten Datenpool oder Datengrundlage 60, konzipiert und trainiert werden. Die Datengrundlage 60 kann beispielsweise Informationen darüber umfassen, welcher Fehler eines Elements des Laserbearbeitungskopfes 10 welche Symptome verursacht. Der Datenpool 60 kann insbesondere Mess- und Prozessdaten zu Test- bzw. Prüfzyklen und/oder zu Zuständen des Laserbearbeitungskopfes 10 bzw. Elementen 13, beispielsweise von Optiken, die bei deren Produktion oder Entwicklung erfasst wurden, umfassen.

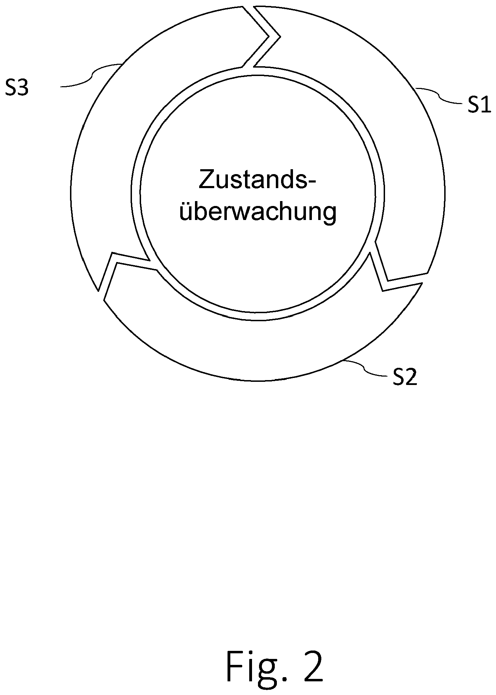

Fig. 2 zeigt eine schematische Ansicht eines Verfahrens zur Zustandsüberwachung eines Laserbearbeitungskopfes gemäß Ausführungsformen der vorliegenden Erfindung.

Das Verfahren umfasst die Schritte "Datenerfassung" (S1), und "Zustandsbestimmung" (S2), die eine Zustandsbewertung umfassen kann, und kann optional den Schritt "Ableitung von Maßnahmen" (S3) umfassen. Während eines Laserbearbeitungsprozesses können diese Schritte kontinuierlich und wiederholt ablaufen. Die Schritte können parallel zueinander, insbesondere zeitlich parallel, ablaufen.

Die Datenerfassung umfasst das Erfassen verschiedener Daten. Die erfassten Daten umfassen die zuvor mit Bezug auf Fig. 1 diskutierten Mess- und Prozessdaten. Wie zuvor diskutiert kann das Erfassen der Messdaten mittels entsprechender Sensoren erfolgen. Das Erfassen der Prozessdaten kann ebenfalls mittels entsprechender Sensoren erfolgen, beispielsweise bei den Ist-Werten der zuvor diskutierten Prozessparameter. Ferner können gewisse Prozessdaten von anderen Elementen des Laserbearbeitungssystems, beispielsweise der Anlagensteuerung 18, an die Recheneinheit 14 übertragen werden. Dies kann beispielsweise für die Soll-Werte der zuvor diskutierten Prozessparameter der Fall sein.

Die Sensoren zum Erfassen der Messdaten bzw. der Prozessdaten können beispielsweise zumindest einen Streulichtsensor umfassen, um die Intensität von Streulicht von optischen Flächen eines optischen Elements 13 des Laserbearbeitungskopfes 10 und/oder in einem (optischen) Innenraum 11 des Laserbearbeitungskopfes 10 zu messen bzw. zu überwachen. Die so erfassten Messdaten des zumindest einen Streulichtsensors erlauben Rückschlüsse auf eine Verschmutzung des optischen Elements bzw. der optischen Elemente 13 des Laserbearbeitungskopfes 10. Weiterhin können dadurch unzulässige optische Elemente 13 von Drittanbietern, z.B. Schutzgläser, detektiert werden, falls deren Beschichtung unzureichende Eigenschaften aufweist, beispielsweise wenn der Laserstrahl 28 sehr stark gestreut bzw. reflektiert wird.

Die Sensoren zum Erfassen der Messdaten bzw. der Prozessdaten können zumindest einen Temperatursensor umfassen. Der Temperatursensor kann dazu eingerichtet sein, um die Temperatur des Laserbearbeitungskopfes 10, einzelner Elemente 13 davon und/oder die Temperatur der Umgebung zu messen. Beispielsweise können mehrere Temperatursensoren vorhanden sein, um die Temperatur einzelner optischer Elemente 13, des Gehäuses des Laserbearbeitungskopfes 10, eine Kühlwassertemperatur, die Temperatur eines elektronischen Elements 13 und/oder einer Düse des Laserbearbeitungskopfes 10 zu messen bzw. zu überwachen.

Basierend auf einer Kombination von Messdaten von Temperatursensoren und Streulichtsensoren kann gemäß Ausführungsformen der vorliegenden Erfindung eine Verschmutzungsart- bzw. ein Verschmutzungsgrad von optischen Elementen 13 geschätzt bzw. näherungsweise klassifiziert werden. Verschmutzungen eines optischen Elements 13 durch Partikel äußern sich beispielsweise durch eine erhöhte Streulichtintensität, während die Temperatur des optischen Elements 13 näherungsweise konstant bleibt. Wiederum äußern sich andere Verschmutzungsarten beispielsweise durch Schmauch auf den optischen Flächen in einem erhöhten Temperaturwert, während der Streulichtwert näherungsweise konstant bleibt. Demnach kann eine erhöhte Temperatur (bei konstanter Streulichtintensität) beispielsweise kritischer zu bewerten sein, als eine erhöhte Streulichtintensität (bei konstanter Temperatur), da eine erhöhte Temperatur einen direkten Einfluss auf eine ungewollte Abweichung der Ist-Fokuslage- von der Soll-Fokuslage des Laserstrahls, auch "Fokusshift" genannt, und somit auf das Prozessergebnis des Laserbearbeitungsprozesses haben kann.

Temperatursensoren auf und/oder in der Nähe von elektrischen oder elektronischen Elementen 13, beispielsweise Kommunikations- und Steuerplatinen, innerhalb des Gehäuses 15 des Laserbearbeitungskopfes 10 können zur Überwachung auf frühzeitige Überhitzung und den damit verbundenen ungeplanten Ausfall der dieser Elemente 13 verwendet werden. Beispielsweise kann ein Ausfall infolge der Überhitzung von Kommunikationsplatinen dazu führen, dass keine Befehle von externen Elementen oder Komponenten an dem Laserbearbeitungskopf 10 ankommen. Zudem erreichen dadurch den Bediener 40 bzw. eine Steuerung des Laserbearbeitungsprozesses keine detaillierten Informationen über den Zustand des Laserbearbeitungskopfes 10 mehr. Der Fehler, warum der Laserbearbeitungskopf 10 nicht mehr funktioniert, ist somit nicht nachvollziehbar. Nicht oder fehlerhaft funktionierende Steuerplatinen, beispielsweise für einen Motor, können dazu führen, dass diese nicht vorgesehene oder keine vorgegebene Position mehr anfahren können. Die Fokuslage des Laserstrahls 28 kann somit nicht mehr eingestellt werden.

Weiter kann zumindest ein Drucksensor zur Überwachung eines Gasdrucks und/oder eines Umgebungsdrucks verwendet werden. Ein Drucksensor kann beispielsweise innerhalb der Schneidgasführung eines Laserschneidkopfes den Schneidgasdruck erfassen bzw. überwachen. Unterliegt der Schneidgasdruck während des Prozesses einer gewissen Schwankung, kann ein gewünschtes Prozessergebnis unter Umständen nicht mehr gewährleistet werden.

Ferner kann zumindest ein Beschleunigungssensor vorgesehen sein. Der zeitliche Verlauf der durch den Beschleunigungssensor erfassten Sensorwerte kann beispielsweise in direktem Zusammenhang mit der Last auf einen Motor stehen, der ein optisches Element 13, beispielsweise eine Fokussierlinse oder Kollimationslinse, innerhalb des Laserbearbeitungskopfes 10 verfährt. Auf Basis von Erfahrungswerten der Lebenszeit von Motoren kann so eine Einschätzung der nutzungsbedingten Abnutzung oder Degradierung des Motors getroffen werden. Mithilfe des Verfahrens gemäß Ausführungsformen der vorliegenden Erfindung kann demnach ein Ausfall des Motors vorhergesagt und dementsprechend Maßnahmen eingeleitet werden.

Anhand von Stromsensoren können Änderungen in der Leistungsaufnahme verschiedener elektrischer oder elektronischer Elemente 13, beispielsweise Platinen, festgestellt werden. Dadurch kann auf Funktionsdefekte elektrischer Bauteile auf den Platinen geschlossen werden.

Luftschallsensoren und Körperschallsensoren können maschinen- und prozessakustische Emissionen erfassen, um eine Abnutzung von Elementen 13 des Laserbearbeitungskopfes 10 festzustellen. Beispielsweise weist eine Zunahme von Vibrationen in gewissen Frequenzbändern am Motor auf eine Abnutzung oder einen akut vorhandenen Betriebsfehler, welcher unbehandelt zu einem ungeplanten Totalausfall führt, hin.

Ferner kann zumindest ein Feuchtigkeitssensor zum Messen einer (Luft-)Feuchtigkeit innerhalb des Gehäuses des Laserbearbeitungskopfes und/oder in einer Umgebung des Laserbearbeitungskopfes vorgesehen sein. In Kombination mit einer gemessenen Kühlwassertemperatur kann ein Kondensieren an den optischen Flächen von optischen Elementen 13 und somit ein Ausfall des Laserbearbeitungskopfes 10 vorhergesagt bzw. vermieden werden.

Sensoren zur Erkennung von RFIDs, Photodioden und/oder Sensoren zum Erkennen bzw. Lesen einer mechanischen Codierung bzw. die Verwendung von codierten Elementen 13 des Laserbearbeitungskopfes 10, beispielsweise von optischen Elementen, Keramikteilen oder einer Düsenelektrode, können vorgesehen sein, um die Verwendung von Elementen von Drittanbietern und somit einen unsachgemäßen Betrieb des Laserbearbeitungskopfes 10 zu erkennen oder zu vermeiden.

Ferner können Lagesensoren, beispielsweise zum Erfassen einer z-Lage (d.h. die Position bezüglich einer optischen Achse des Laserbearbeitungskopfes 10) einer Kollimationslinse vorgesehen sein. In Kombination mit dem Ansteuerbefehl der Linsenposition bei einer Einstellung der Fokuslage des Laserstrahls 28 durch den Bediener 40 kann beispielsweise festgestellt werden, ob ein Problem eines Motors zum Verstellen der Kollimationslinse vorliegt. Beispielsweise wird bei einem Bandriss eines Bandmotors keine Änderung der z-Lage festgestellt und durch den Lagensensor lediglich eine untere z-Lage der Fokussierlinse ausgegeben.

Des Weiteren können Abstandssensoren, beispielsweise kapazitive Abstandssensoren und/oder optische Abstandssensoren, beispielsweise basierend auf OCT ("optical coherence tomography", Optische Kohärenztomografie), vorgesehen sein. Damit kann beispielsweise ein Abstand des Laserbearbeitungskopfes 10 von dem Werkstück 1 bzw. eine Kollision des Laserbearbeitungskopfes 10 mit dem Werkstück 1 erfasst bzw. detektiert werden.

Diese geschilderten Zusammenhänge können in dem zuvor diskutierten Expertenwissen 50 enthalten sein und für das Training der ML-Modelle 20-24 und folglich auch für die Zustandsbestimmung verwendet werden.

Die Zustandsbestimmung kann das Bestimmen des Zustands einzelner Elemente 13 und/oder Module des Laserbearbeitungskopfes 10 mithilfe der elementspezifischen ML-Modelle 22 umfassen. Darauf basierend kann mit Hilfe des ganzheitlichen Modells 24 der Zustand des Laserbearbeitungskopfes 10 als Ganzes bestimmt bzw. geschätzt werden, beispielsweise ob der Laserbearbeitungskopf noch einsatzfähig bzw. im gewünschten Betriebszustand ist oder nicht. Zum Bestimmen und zum Beurteilen des Gesamtzustands des Laserbearbeitungskopfes 10 können die Zustände der einzelnen Elemente 13 mit unterschiedlicher Gewichtung herangezogen werden. Der Zustand des Laserbearbeitungskopfes 10 kann demnach auf zumindest einem Zustand eines Elements 13 bzw. auf einer Kombination der Zustände mehrerer, beispielsweise zwei, Elemente 13 basieren. Der Zustand des Laserbearbeitungskopfes 10 kann direkt das Prozessergebnis, insbesondere eine Prozessqualität und/oder Prozesseffizienz, beeinflussen.

Demnach kann das Bestimmen des Zustands des Laserbearbeitungskopfes 10 bzw. das nachfolgend beschriebene Bestimmen eines Ausgangsvektors das Bestimmen von geschätzten Zustandsdaten von einzelnen Elementen 13 des Laserbearbeitungskopfes 10 durch Anwenden von entsprechenden ersten Modellen 22 für die einzelnen Elemente 13 auf die Mess- bzw. Prozessdaten und das Bestimmen von geschätzten Zustandsdaten des Laserbearbeitungskopfes 10 durch Anwenden des zweiten, ganzheitlichen Modells 24 auf die geschätzten Zustandsdaten der einzelnen Elemente 13 umfassen.

Wie zuvor mit Bezug auf Fig. 1 diskutiert kann der Zustand des Laserbearbeitungskopfes 10 bzw. der Zustand einzelner oder mehrerer, beispielsweise zwei, Elemente 13 jeweils anhand von einer oder mehreren Zustandsgrößen angegeben oder beschrieben werden. Jede der Zustandsgröße kann verschiedene Werte annehmen. Die Werte einer oder mehrerer Zustandsgrößen bilden entsprechende Zustandsdaten für den Zustand des Laserbearbeitungskopfes 10 bzw. der einzelnen Elemente 13. Die jeweiligen Zustandsgrößen können von den entsprechenden elementspezifischen ML-Modellen 22 bzw. dem ganzheitlichen ML-Modell 24 als Zustandsdaten ausgegeben werden. Jede der Zustandsgrößen kann verschiedene Werte annehmen. Der Zustand des Laserbearbeitungskopfes 10 bzw. einzelner Elemente 13 desselben kann also durch die entsprechenden Zustandsdaten beschrieben oder repräsentiert sein.

Mithilfe des bestimmten Zustands des Laserbearbeitungskopfes 10 kann somit eine Aussage darüber getroffen werden, ob der Laserbearbeitungskopf 10 noch einsatzfähig ist. Dies kann beispielsweise einem vorgesehenen oder gewünschten Betriebszustand des Laserbearbeitungskopfes 10, der ein Soll-Zustand des Laserbearbeitungskopfes sein kann, entsprechen. Dementsprechend kann eine Zustandsgröße einen ersten Wert aufweisen oder in einem ersten Bereich liegen. Ferner kann ermittelt werden, ob der Laserbearbeitungskopf 10 nicht mehr einsatzfähig ist. Dementsprechend kann die Zustandsgröße einen zweiten Wert aufweisen oder in einem zweiten Bereich liegen. Darüber hinaus kann für den Zustand ein kritischer Bereich angegeben sein, bevor der Zustand von dem gewünschten Betriebszustand in den Zustand wechselt, bei dem der Laserbearbeitungskopf 10 nicht mehr einsatzfähig ist. Dieser kritische Bereich des Zustands kann einem dritten Wert oder einem dritten Bereich der Zustandsgröße entsprechen. Diese Betrachtung des bestimmten Zustands kann auch als Zustandsbewertung bezeichnet werden. Eine entsprechende Zustandsbewertung kann ebenfalls für einzelne Elemente 13 des Laserbearbeitungskopfes 10 erfolgen.

Die Ableitung von Maßnahmen kann das Ausgeben entsprechender Fehlermeldungen und/oder Infomeldungen an den Bediener 40 umfassen. Diese Meldungen können beispielsweise den Zustand des Laserbearbeitungskopfes 10 bzw. der Elemente 13, die Ursachen (beispielsweise "Schutzglas verschmutzt") dafür und/oder Handlungsempfehlungen bzw. Maßnahmen (beispielsweise "Schutzglas wechseln") enthalten. Die Maßnahmen können auch einen automatischen bzw. automatisierten Eingriff umfassen, beispielsweise einen Eingriff in den Laserbearbeitungsprozess, beispielsweise das Regeln entsprechender Prozessparameter oder einen automatischen Düsenwechsel. Durch die Maßnahmen kann der Soll-Zustand wiederhergestellt werden. Basierend auf dem bestimmten Zustand des Laserbearbeitungskopfes 10 und/oder auf dem Zustand einzelner oder mehrerer, beispielsweise zwei, Elemente 13 kann ferner der Laserbearbeitungsprozess geregelt werden, um ein gewünschtes Bearbeitungsergebnis sicherzustellen.

Ursachen für die Abweichung vom Soll-Zustand, ggf. Auswirkungen auf den Laserbearbeitungsprozess bzw. -kopf und mögliche Maßnahmen sind beispielhaft in Tabelle 1 aufgelistet:

**Tabelle 1**

| Ursache(n)/Auswirkung(en): | Maßnahme(n): |
|---|---|
| Optische Elemente: | |
| Verschmutzung einer optischen Fläche/eines optischen Elements | Tausch des Elements, Kontaktierung des Service |
| Einsatz von optischen Elementen, beispielsweise Optiken, eines Drittanbieters: | Stopp des Laserbearbeitungsprozesses und Informationsausgabe an Bediener |
| Dies kann zu einer Beschädigung des Laserbearbeitungskopfes aufgrund von zu hohen Laserreflexen an optischen Beschichtungen führen. | |
| Laserleistung überschreitet die maximal zulässige Leistung: Hierbei besteht die Ge-fahr einer Beschädigung von optischen Elementen oder des Laserbearbeitungskopfes. | Stopp des Laserbearbeitungsprozesses und Informationsausgabe an Bediener |

| **Elektrische bzw. elektronische Elemente:** | |
|---|---|
| Elektronische Elemente, beispielsweise Steuer- und/oder Kommunikationsplatinen, sind zu heiß. | Stopp des aktuellen Laserbearbeitungsprozesses und Abkühlen des Laserbearbeitungskopfes, ggf. Wechsel der elektronischen Elemente |
| Mechanische Komponenten, beispielsweise Motoren, abgenutzt | zeitlich begrenzte weitere Verwendung, Planen von Austauschmaßnahmen, Kontaktierung des Service |
| Motorband gerissen | Stopp des Laserbearbeitungsprozesses, Einleiten von Austausch-/Reparaturmaßnahmen, Kontaktierung des Service |
| Hohe Ströme in elektronischen Elementen Sensor- oder Kommunikationsplatinen | zeitlich begrenzte weitere Verwendung oder Stopp des Laserbearbeitungsprozesses und Einleiten von Austausch-/Reparaturmaßnahmen, Kontaktierung des Service |

| **Mechanische Elemente:** | |
|---|---|
| Keramik defekt | Keramik wechseln |
| Düse beschädigt | Düsenwechsel |
| Düse zu heiß, beispielsweise da eine Fokuslage des Laserstrahls und/oder ein Abbildungsverhältnis in einem unzulässigen Bereich ist | Fokuslage und/oder Abbildungsverhältnis ändern |
| Umgebungsfeuchtigkeit und/oder Feuchtigkeit im Kopf zu hoch | Kühlwassertemperatur anpassen |
| Kühlwasserdurchfluss zu gering | Bediener informieren |
| Antriebseinheit einer motorisch verstellba-ren Linse defekt, beispielsweis aufgrund eines Bandrisses | Stopp des Laserbearbeitungsprozesses, Einleiten von Austausch-/Reparaturmaßnahmen, Kontaktierung des Service |
| Druckabfall in einer Schneidgasführung, beispielsweise aufgrund eines Kabelbruchs | Schneidgasleitung kontrollieren |
| Druckanstieg zwischen zwei optischen Elementen aufgrund einer Leckage | Stopp des Laserbearbeitungsprozesses, Einleiten von Austausch-/Reparaturmaßnahmen, Kontaktierung des Service |

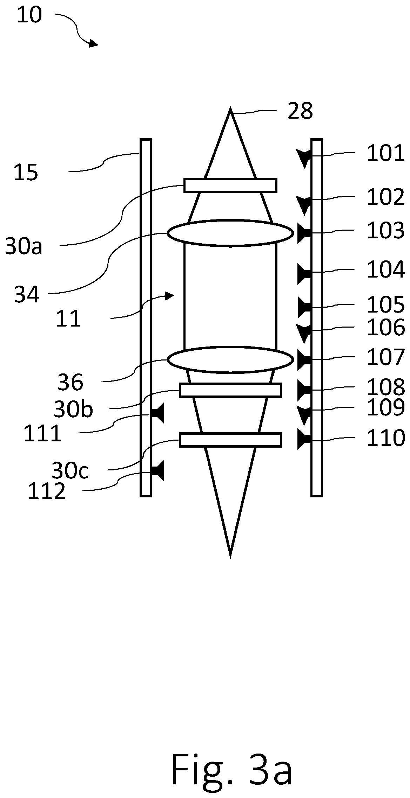

Fig. 3a bis 3d zeigen schematische Ansichten von Sensoren für Verfahren zur Zustandsüberwachung eines Laserbearbeitungskopfes gemäß Ausführungsformen der vorliegenden Erfindung.

Die Fig. 3a bis 3d zeigen jeweils eine schematische Querschnittsansicht verschiedener Ausführungsformen für die Anzahl und Anordnung der verwendeten Sensoren an oder in dem in Fig. 1 gezeigten Laserbearbeitungskopf. Die Sensoren ermöglichen die Erfassung der Messdaten, insbesondere von einer Temperatur, Streulicht, Druck, insbesondere eines Schneidgasdrucks, und Feuchtigkeit.

Fig. 3a bis 3d zeigen jeweils den Laserbearbeitungskopf 10 mit einem optischen Innenraum 11, der von einem Gehäuse 15 begrenzt wird, eine Kollimationslinse, -linsenpaket oder - linsengruppe 34 zum Kollimieren eines Laserstrahls 28 und eine Fokussierlinse, - linsenpaket oder -linsengruppe 36 zum Fokussieren des Laserstrahls 28 auf ein Werkstück 1(nicht gezeigt). Die Elemente 34 und 36 sind jeweils im Innenraum 11 des Laserbearbeitungskopfes 10 angeordnet. Der Laserbearbeitungskopf 10 umfasst ferner zumindest ein Schutzglas oder Schutzglaspaket an einer Eintrittsöffnung für den Laserstrahl 28 in den Laserbearbeitungskopf 10 und zumindest ein Schutzglas oder Schutzglaspaket an einer Austrittsöffnung für den Laserstrahl 28 aus dem Laserbearbeitungskopf 10.

Fig. 3a zeigt einen Laserbearbeitungskopf 10, der als Laserschneidkopf ausgebildet ist, und zeigt ferner einen Sensor 101 zum Messen von Streulicht eines ersten Schutzglases oder Schutzglaspakets 30a, einen Sensor 102 zum Messen von Streulicht der Kollimierlinse oder Kollimierlinsenpakets 34, einen Sensor 103 zum Messen einer Temperatur der Kollimierlinse oder Kollimierlinsenpakets 34, einen Sensor 104 zum Messen von Streulicht im Innenraum 11 des Laserbearbeitungskopfes 10, einen Sensor 105 zum Messen einer Feuchtigkeit im Innenraum 11 des Laserbearbeitungskopfes 10, einen Sensor 106 zum Messen von Streulicht der Fokussierlinse oder Fokussierlinsenpaket 36, einen Sensor 107 zum Messen einer Temperatur der Fokussierlinse oder Fokussierlinsenpakets 36, einen Sensor 108 zum Messen einer Temperatur eines zweiten Schutzglases oder Schutzglaspakets 30b, einen Sensor 109 zum Messen von Streulicht eines dritten Schutzglases oder Schutzglaspakets 30c, einen Sensor 110 zum Messen von einer Temperatur des dritten Schutzglases oder Schutzglaspakets 30c, einen Sensor 111 zum Messen eines Drucks, insbesondere eines Schneidgasdrucks, zwischen dem zweiten Schutzglas oder Schutzglaspaket 30b und dem dritten Schutzglas oder Schutzglaspaket 30c, und einen Sensor 112 zum Messen eines Schneidgasdrucks zwischen dem letzten (hier: dritten) Schutzglas bzw. Schutzglaspaket 30c und der Austrittsöffnung des Laserbearbeitungskopfs 10. Wie gezeigt sind das erste Schutzglas oder Schutzglaspaket 30a an der Eintrittsöffnung und das zweite und dritte Schutzglas oder Schutzglaspaket 30b, 30c an der Austrittsöffnung angeordnet.

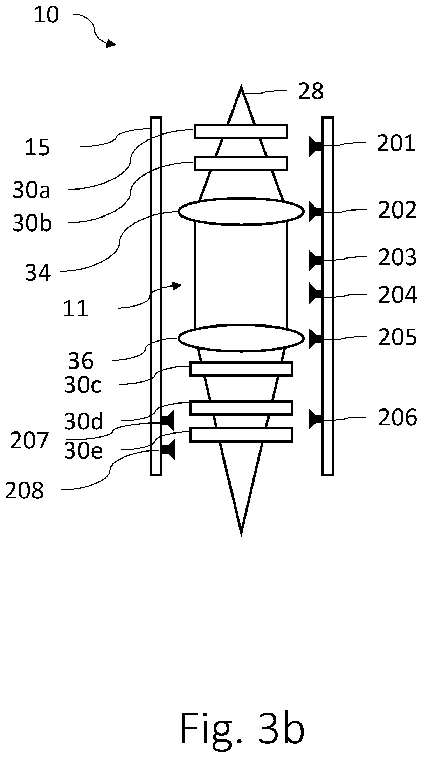

Fig. 3b zeigt einen Laserbearbeitungskopf 10, der als Laserschneidkopf ausgebildet ist, und zeigt ferner einen Sensor 201 zum Messen von Streulicht eines ersten Schutzglases oder Schutzglaspakets 30a und eines zweiten Schutzglases oder Schutzglaspakets 30b, einen Sensor 202 zum Messen einer Temperatur der Kollimierlinse oder Kollimierlinsenpakets 34, einen Sensor 203 zum Messen einer Temperatur des Innenraums 11, einen Sensor 204 zum Messen einer Feuchtigkeit des Innenraums 11, einen Sensor 205 zum Messen einer Temperatur der Fokussierlinse oder Fokussierlinsenpakets 36, einen Sensor 206 zum Messen einer Temperatur eines vierten Schutzglases oder Schutzglaspakets 30d und eines fünften Schutzglases oder Schutzglaspakets 30e, einen Sensor 207 zum Messen eines Drucks, insbesondere eines Schneidgasdrucks, zwischen dem vierten Schutzglas oder Schutzglaspakets 30d und dem fünften Schutzglas oder Schutzglaspakets 30e, und einen Sensor 208 zum Messen eines Schneidgasdrucks zwischen dem letzten (hier: fünften) Schutzglas bzw.

Schutzglaspaket 30e und der Austrittsöffnung des Laserbearbeitungskopfs 10. Fig. 3b zeigt ferner ein drittes Schutzglas 30c. Wie gezeigt sind das erste und zweite Schutzglas oder Schutzglaspaket 30a, 30b an der Eintrittsöffnung und das dritte bis fünfte Schutzglas oder Schutzglaspaket 30c, 30d, 30e an der Austrittsöffnung angeordnet.

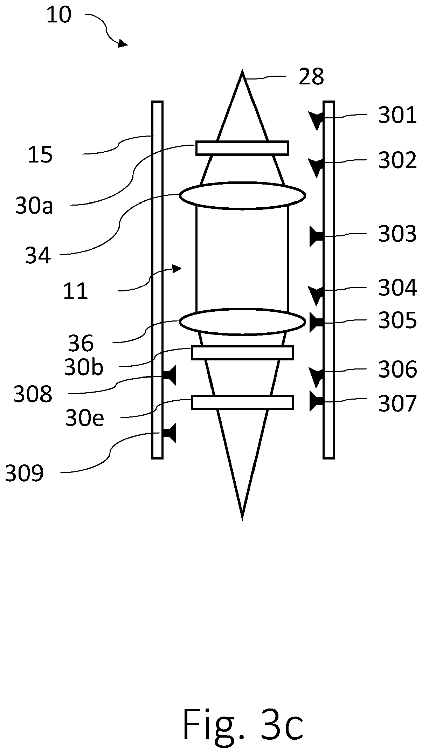

Fig. 3c zeigt einen Laserbearbeitungskopf 10, der als Laserschneidkopf ausgebildet ist, und zeigt ferner einen Sensor 301 zum Messen von Streulicht eines ersten Schutzglases oder Schutzglaspakets 30a, einen Sensor 302 zum Messen von Streulicht der Kollimierlinse oder Kollimierlinsenpakets 34, einen Sensor 303 zum Messen von Streulicht im Innenraum 11, einen Sensor 304 zum Messen von Streulicht der Fokussierlinse oder Fokussierlinsenpakets 36, einen Sensor 305 zum Messen einer Temperatur der Fokussierlinse oder Fokussierlinsenpakets 36, einen Sensor 306 zum Messen von Streulicht eines dritten Schutzglases oder Schutzglaspakets 30c, einen Sensor 307 zum Messen einer Temperatur des dritten Schutzglases oder Schutzglaspakets 30c, einen Sensor 308 zum Messen eines Drucks, insbesondere eines Schneidgasdrucks, zwischen dem dritten Schutzglas oder Schutzglaspakets 30c und einem zweiten Schutzglas oder Schutzglaspakets 30b und einen Sensor 309 zum Messen eines Schneidgasdrucks zwischen dem letzten (hier: fünften) Schutzglas bzw. Schutzglaspaket 30e und der Austrittsöffnung des Laserbearbeitungskopfs 10. Wie gezeigt sind das erste Schutzglas oder Schutzglaspaket 30a an der Eintrittsöffnung und das zweite und dritte Schutzglas oder Schutzglaspaket 30b, 30c an der Austrittsöffnung angeordnet.

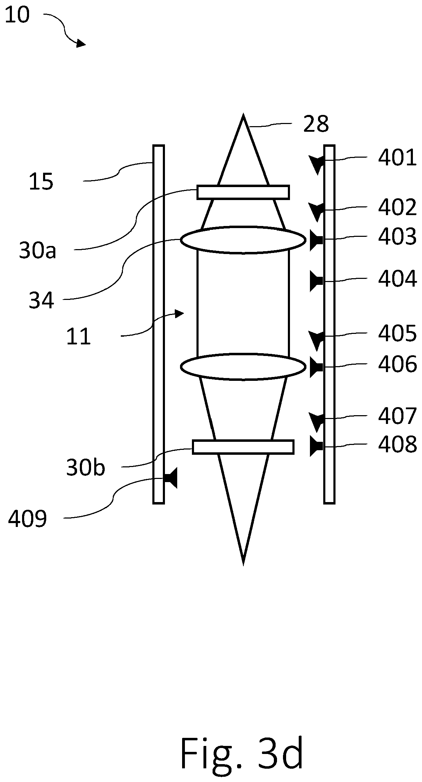

Fig. 3d zeigt einen Laserbearbeitungskopf 10, der als Laserschneidkopf ausgebildet ist, und zeigt ferner einen Sensor 401 zum Messen eines Streulichts eines ersten Schutzglases oder Schutzglaspakets 30a, einen Sensor 402 zum Messen von Streulicht der Kollimierlinse oder Kollimierlinsenpakets 34, einen Sensor 403 zum Messen einer Temperatur der Kollimierlinse oder Kollimierlinsenpakets 34, einen Sensor 404 zum Messen von Streulicht im Innenraum 11, einen Sensor 405 zum Messen von Streulicht der Fokussierlinse oder Fokussierlinsenpakets 36, einen Sensor 406 zum Messen einer Temperatur der Fokussierlinse oder Fokussierlinsenpakets 36, einen Sensor 407 zum Messen von Streulicht eines zweiten Schutzglases oder Schutzglaspakets 30b, einen Sensor 408 zum Messen einer Temperatur des zweiten Schutzglases oder Schutzglaspakets 30b und einen Sensor 409 zum Messen eines Schneidgasdrucks zwischen dem letzten (hier: zweiten) Schutzglas bzw. Schutzglaspaket 30b und der Austrittsöffnung des Laserbearbeitungskopfs 10. Wie gezeigt sind das erste Schutzglas oder Schutzglaspaket 30a an der Eintrittsöffnung und das zweite Schutzglas oder Schutzglaspaket 30b an der Austrittsöffnung angeordnet.

Fig. 4 zeigt schematisch ein Konzept zum besseren Verständnis eines Verfahrens zum Trainieren eines ML-Modells für Verfahren zur Zustandsüberwachung eines Laserbearbeitungskopfes gemäß Ausführungsformen der vorliegenden Erfindung.

Das Training der in Fig. 1 gezeigten ML-Modelle 20-24 kann für eine jeweilige Konfiguration eines Laserbearbeitungskopfes 10 mit einem breiten Datenpool 60 durgeführt werden. Eine Konfiguration eines Laserbearbeitungskopfes 10 kann insbesondere die jeweiligen, in dem Laserbearbeitungskopf 10 verwendeten optischen, mechanischen und elektrischen/elektronischen Elemente 13 angeben bzw. definieren. Somit können für jede Konfiguration eines Laserbearbeitungskopfes 10 die ML-Modelle 20-24 entsprechend trainiert werden.

Zum Aufnehmen bzw. Erhalten der mit Bezug auf Fig. 1 diskutierten Datengrundlage 60 werden beispielsweise für möglichst viele Testszenarien entsprechende Referenz- oder Trainingsdaten erfasst. Die Testszenarien umfassen beispielsweise die Verwendung von sauberen und verschmutzen optischen Elementen 13, oder von über einen langen Zeitraum verwendeten und demnach abgenutzten oder gealterten mechanischen oder elektronischen Elementen 13 bei einer Vielzahl von Laserbearbeitungsprozessen. Die Referenzdaten umfassen Messdaten und/oder Prozessdaten sowie entsprechende vorgegebene Werte der Zustandsgrößen zur Angabe des Zustands des Laserbearbeitungskopfes 10 bzw. einzelner Elemente 13. Die Messdaten können von Sensoren, die am oder im Laserbearbeitungskopf 10 angeordnet sind, an die Recheneinheit 14 übertragen werden. Die Prozessdaten können von der Laserquelle 12, der Anlagensteuerung 18 und ggf. weiterer Elemente des Laserbearbeitungssystems an die Recheneinheit 14 übertragen werden. Die Sensordaten und die Prozessdaten können von der Recheneinheit 14 für die jeweiligen Testszenarien aufgezeichnet werden und somit als Datengrundlage 60 zum Training des ML-Modelle 20-24 dienen.

Die Datengrundlage 60 umfasst auch entsprechende Werte der Zustandsgrößen, die den Zustand des Laserbearbeitungskopfes 10 bzw. einzelner Elemente 13 beschreiben. Diese werden für jedes Testszenario vorgegeben und von der Recheneinheit 14 ebenfalls als Teil der Datengrundlage 60 aufgezeichnet.

Die Datengrundlage 60 kann für jedes Exemplar des Laserbearbeitungskopfes 10 mit einer vorgegebenen Konfiguration bei dessen Herstellung durch vordefinierte Prüfzyklen individuell nachoptimiert werden, um eine genauere Aussagegenauigkeit der ML-Modelle 20-24 bei der späteren Anwendung zu erzielen (Parameter-Feinabstimmung).

Zudem kann für das Training oder die Parameter-Feinabstimmung auch Expertenwissen aus der Entwicklungs- und Produktionsphase und der Servicephase herangezogen werden. Beispielsweise können realistische Temperaturwertebereiche bei Linsentemperaturen, sogenannte "Constraints", oder Wissen über Fehlersymptome (Motor wurde angesteuert, aber die z-Achsenposition zeigte keine Änderung) einfließen. Die ML-Modelle 20-24 können für den speziellen Trainings- und Einsatzbereich optimiert werden. Der jeweilige Algorithmus des ML-Modells kann je nach Natur der zugrundeliegenden Daten gewählt werden.

Beispielsweise kann bei einem großen Datensatz mit Gleitkomma-Sensorwerten, der ein komplexes Zusammenspiel von physikalischen Wechselwirkungen abbildet, ein Neural-Network-Algorithmus verwendet werden. Dies ist beispielsweise bei der Betrachtung von Temperaturverläufen oder Streulichtverläufen optischer Elemente oder bei Beschleunigungs- und Schallsensoren bei mechanischen Elementen bevorzugt.

Bei einem kleineren Datensatz mit Gleitkomma-Sensorwerten, der ein komplexes Zusammenspiel von physikalischen Wechselwirkungen abbildet, kann ein Random-Forest- oder SVM-Algorithmus verwendet werden. Dies ist beispielsweise bei der Betrachtung lediglich von optischen Elementen, insbesondere bei der Betrachtung von Temperaturverläufen oder Streulichtverläufen optischer Elemente, bevorzugt.

Bei geringen Datenmengen mit einem Großteil an logischen Abhängigkeiten und Regeln, die auf Expertenwissen beruhen, können bevorzugt Entscheidungsbäume verwendet werden.

In Fig. 4 ist beispielhaft das Training eines elementspezifischen ML-Modells 22 zur Bestimmung eines Zustands eines optischen Elements 13, beispielsweise eines Schutzglases, insbesondere Schutzglases nahe an einem Bearbeitungsbereich des Laserbearbeitungsprozesses bzw. des letzten Schutzglases, veranschaulicht. Um verschiedene Fehlercharakteristika und damit verschiedene Testszenarien zu generieren, werden hierzu optische Elemente in verschiedenen Zuständen in den Laserbearbeitungskopf eingesetzt und Mess- und Prozessdaten und Zustandsdaten zur Angabe bzw. Qualifizierung des Zustands der einzelnen Elemente erfasst bzw. aufgezeichnet. Die verschiedenen Zustände können einen guten Zustand, beispielsweise ein sauberes optisches Schutzglas, und fehlerhafte bzw. verschlechterte Zustände, beispielsweise ein gealtertes und/oder verschmutztes Schutzglas, umfassen. Die Zustandsdaten zur Angabe des Zustands des optischen Elements können gemessene Werte einer Verschmutzung des optischen Elements, beispielsweise über optische Partikelmessungen, und/oder subjektive Angaben, beispielsweise mittels einer optischen Einschätzung dessen Sauberkeit ("gut", "mittel", "schlecht") umfassen.

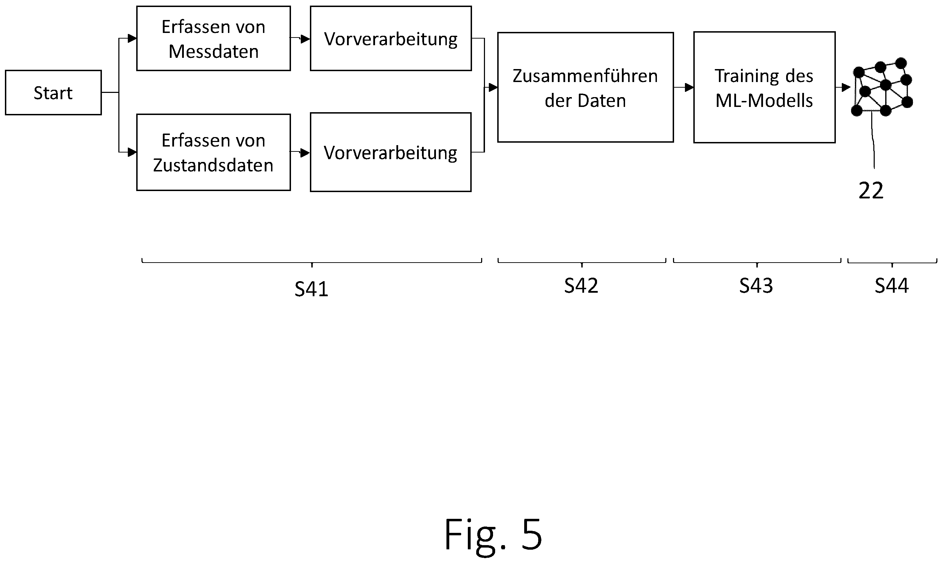

Fig. 5 zeigt ein Ablaufdiagramm eines Verfahrens zum Trainieren eines ML-Modells für Verfahren zur Zustandsüberwachung eines Laserbearbeitungskopfes gemäß Ausführungsformen der vorliegenden Erfindung am Beispiel eines elementspezifischen ML-Modells 22 für ein optisches Element 13 (vgl. Fig. 4).

Die für das Trainieren der ML-Modelle 20-22 verwendete Datengrundlage 60 umfasst das Aufnehmen der Messdaten, beispielsweise das Erfassen von Temperaturwerten eines optischen Elements und/oder das Erfassen einer Streulichtintensität des optischen Elements, beispielsweise mittels Photodioden, und das Erfassen von entsprechenden Zustandsdaten (S41) des optischen Elements. Die Zustandsdaten umfassen beispielsweise eine oder mehrere Momentaufnahmen der auf thermischen Effekten und/oder auf der Deformation des optischen Elements beruhenden dynamischen Fokuslagenabweichung zur Soll-Fokuslage bzw. Fokusshift und/oder des durch optische Partikelmessungen gemessenen und/oder subjektiv wahrgenommenen Verschmutzungsgrads des optischen Elements. Die erfassten Messdaten und die erfassten Zustandsdaten werden anschließend zur Vorbereitung auf die Zusammenführung (S42) vorverarbeitet. Beispielsweise werden die Daten von ausreißenden Werten bereinigt und/oder es wird eine Kurvenglättung durchgeführt. Ferner kann eine Interpolation der jeweiligen Daten durchgeführt werden, um entsprechende Messzeitpunkte zu synchronisieren.

Anschließend werden die Messdaten und die Zustandsdaten zusammengeführt (S42). Dabei können einzelne und/oder mehrere zeitlich abhängige und/oder unabhängige Messwerte den jeweiligen Zustandswerten zugeordnet werden.

Tabellen 2a und 2b zeigen beispielhaft eine tabellarische Darstellung der Messdaten und Zustandsdaten nach der Zusammenführung. Jedem Messwerte-Vektor wird somit ein entsprechender Gütemaß-Vektor zugeordnet (Zeilendarstellung in Tabelle 2a) oder einem zeitlichen Ablauf von Messwerte-Vektoren einem übergeordneten Gütemaß-Vektor (Zeilendarstellung in Tabelle 2b).

Tabelle 2a zeigt eine Zusammenführung, bei der zeitlich unabhängige Messwerte der Messgrößen 1 bis n jeweils einem Wert einer Zustandsgröße 1 bis m zugeordnet wurden. In Tabelle 2a entspricht die Messgröße 1 beispielsweise einer Intensität eines Streulichts an einem Schutzglas, die Messgröße 2 einer Temperatur an einem Schutzglas, und die Messgrö-βe 3 der Temperatur an einer Fokussierlinse. Die Zustandsgröße 1 entspricht beispielsweise einem Fokusshift in mm und die Zustandsgröße 2 entspricht beispielsweise einer subjektiven Einschätzung der Sauberkeit des Schutzglases ("gut", "mittel", "schlecht").

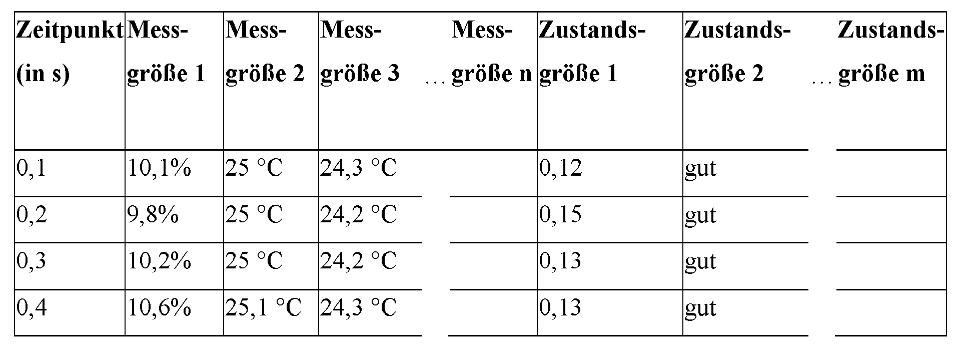

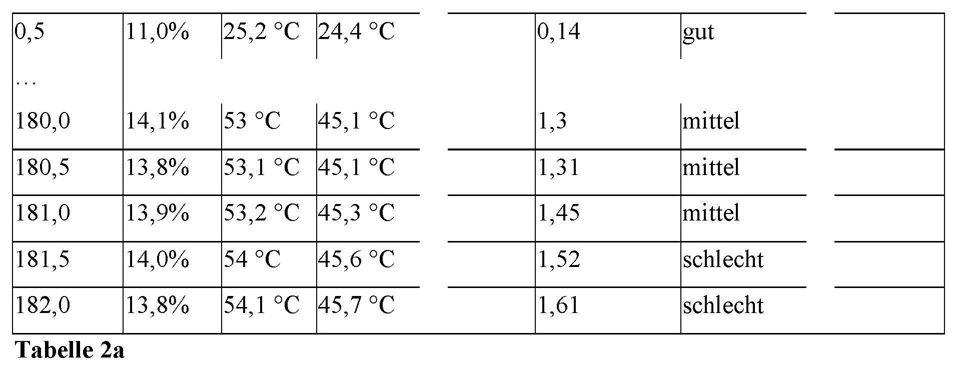

Tabelle 2b zeigt eine Zusammenführung, bei der zeitlich abhängige Messwerte der Messgrößen 1 bis n jeweils einem Wert einer Zustandsgröße 1 bis m zugeordnet wurden. Die Messgrößen 1 bis n und die Zustandsgrößen 1 bis m entsprechen den Mess- und Zustandsgrößen aus Tabelle 2a.

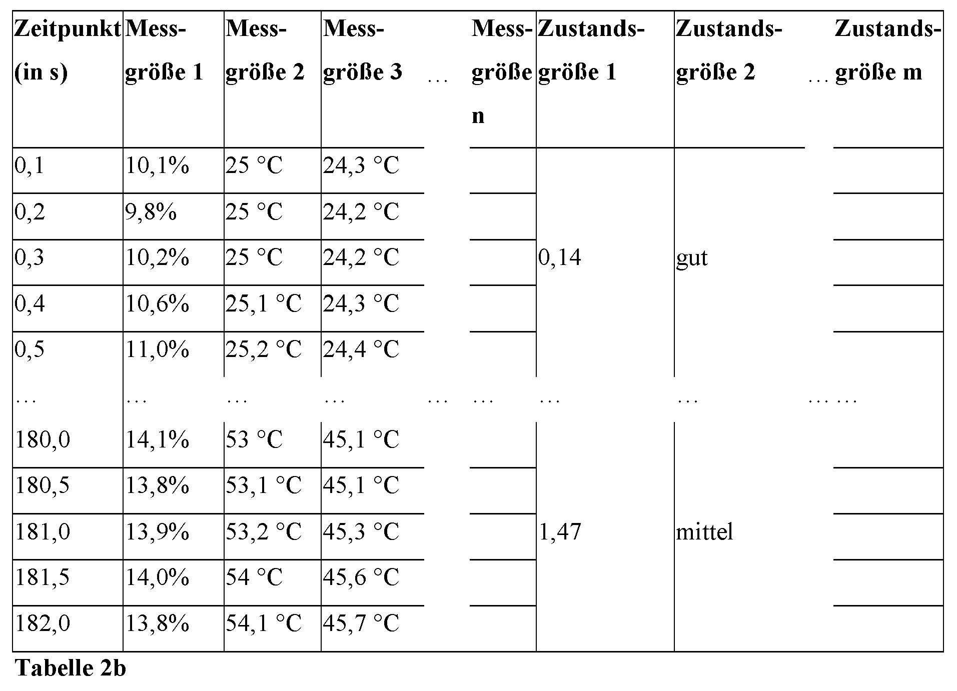

Die Messwerte der Messgrößen 1 bis n können als Messdaten-Vektor und die Zustandswerte der Zustandsgrößen 1 bis m können als Zustandsdaten-Vektor zusammengefasst werden. Jedem Messdaten-Vektor kann somit ein entsprechender Zustandsdaten-Vektor zugeordnet werden. Beispielsweise kann in Tabelle 2a jedem Messdaten-Vektor, der einer Zeile mit mehreren zeitlich unabhängigen Messwerten verschiedener Messgrößen entspricht, ein entsprechender Zustandsdaten-Vektor mit Werten der zwei Zustandsgrößen 1 und 2 zugeordnet werden, oder in Tabelle 2b kann einem bzw. mehreren Messdaten-Vektoren, die mehreren Zeilen mit einem zeitlichen Verlauf von verschiedenen Messgrößen entspricht, ein entsprechender Zustandsdaten-Vektor mit Werten der zwei Zustandsgrößen 1 und 2 zugeordnet werden.

Für das Training (S43) des ML-Modells wird die Datengrundlage 60 zur Regression oder Klassifikation verwendet. Die Datengrundlage umfasst die Menge aller Messdaten-Vektoren als Eingangsgrößen, d.h. die erfassten zeitlichen Verläufe der jeweiligen Messgrößen, als Eingangsvektor bzw. Merkmale und die Menge aller Zustandsdaten-Vektoren als Ausgangsvektor, bzw. als zugewiesene Zielgrößen zum Training des jeweiligen Algorithmus des ML-Modells. Die Menge aller zeitlich aufeinanderfolgenden aufgenommenen Messwerte-Vektoren wird dem MI,-Modell als Merkmale und die Menge der Zustands-Vektoren als zugewiesene Zielgrößen, z.B. zur Regression oder Klassifikation, übergeben. Am Ende des Trainings steht das resultierende ML-Modell (S43).

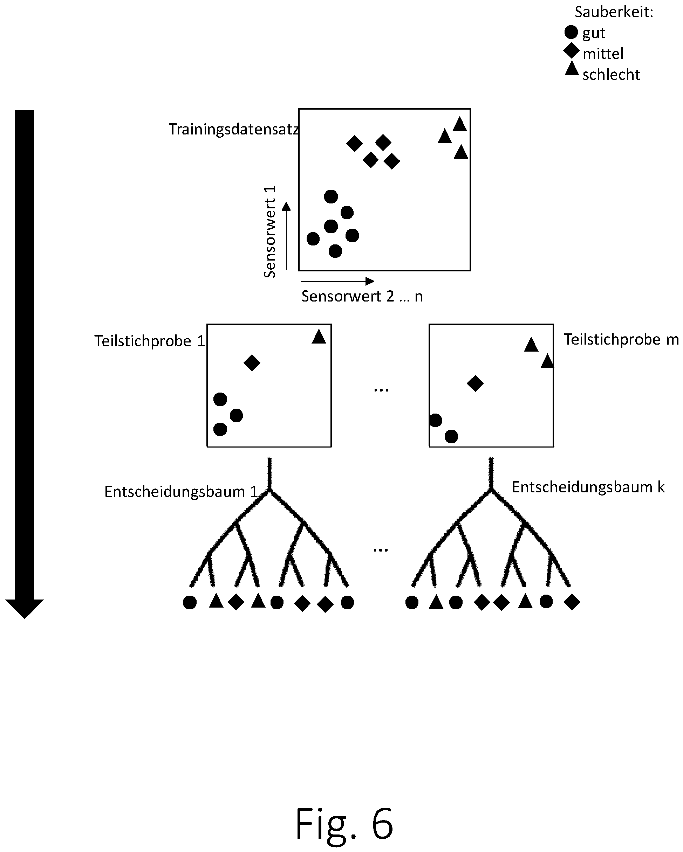

Fig. 6 zeigt schematisch einen beispielhaften Ablauf zum Trainieren eines ML-Modells für Verfahren zur Zustandsüberwachung eines Laserbearbeitungskopfes gemäß Ausführungsformen der vorliegenden Erfindung. Fig. 6 zeigt den Schritt S43 aus Fig. 5 im Detail.

Das Trainieren (S43) ist am Beispiel einer Klassifikation und dem Random-Forest-Algorithmus zur Bildung des ML-Modells für den in Tabelle 2a und 2b aufgeführten Zustandswert 2 "Sauberkeit des Schutzglases" erläutert. Gemäß Ausführungsformen der vorliegenden Erfindung können alternative Algorithmen, beispielsweise neuronale Netze oder Support Vector Machines, oder eine Kombination mehrerer Algorithmen je nach Anforderung, beispielsweise Genauigkeit, verfügbarer Rechenleistung, Entscheidung zwischen Klassifikations- oder Regressionsaufgabe, Datengrundlage etc., verwendet werden.

Beim Random-Forest-Algorithmus werden aus dem n-dimensionalen Sensorwertraum Teilstichproben 1 bis m gebildet, welche jeweils zum Training eines eigenen Entscheidungsbaums 1 bis k verwendet werden. Die Blätter des Entscheidungsbaums entsprechen der Klassifikation (hier: gut, mittel, schlecht), d.h. einem entsprechenden Zustandswert der Zustandsgröße. Die Gesamtheit der k Entscheidungsbäume entspricht dem ML-Modell.

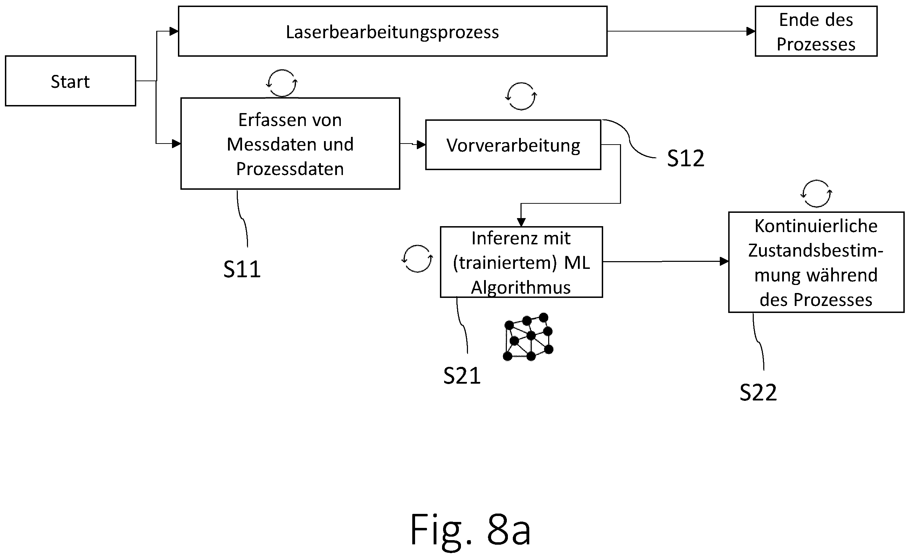

Fig. 7 zeigt schematisch ein Konzept zum besseren Verständnis des Verfahrens zur Zustandsüberwachung eines Laserbearbeitungskopfes gemäß Ausführungsformen der vorliegenden Erfindung. Fig. 8a zeigt schematisch den Ablauf eines Verfahrens zur Zustandsüberwachung eines Laserbearbeitungskopfes gemäß Ausführungsformen der vorliegenden Erfindung.

Um den Zustand eines Laserbearbeitungskopfes 10 während eines Laserbearbeitungsprozesses unter Verwendung eines zuvor trainierten ML-Modells 20 zu überwachen, empfängt und erfasst die Recheneinheit 14 aktuelle Messdaten des Laserbearbeitungskopfes 10, beispielsweise die Temperatur an optischen Elementen oder die Intensität von Streulicht, und erhält optional weitere Daten, insbesondere Prozessdaten wie eine aktuelle Laserleistung von der Laserquelle 12 (S11). Die Daten können vorverarbeitet werden, um sie zu glätten und/oder zu interpolieren (S12). Diese Daten werden entweder durch die Recheneinheit 14 selbst oder durch eine externe Recheneinheit (nicht gezeigt) anhand des zuvor trainierten ML-Modells 20 inferiert (S21) und basierend darauf werden geschätzte aktuelle Zustandsdaten, die den geschätzten aktuellen Zustand des Laserbearbeitungskopfes angeben, bestimmt bzw. ausgegeben (S22), beispielsweise ein geschätzter Fokusshift oder der geschätzte aktuelle Zustand von Schutzgläsern (gut, mittel, oder schlecht). Die Schritte S11, S12, S21 und S22 können kontinuierlich und/oder in bestimmten Zeitintervallen während des Laserbearbeitungsprozesses erfolgen und können insbesondere parallel zueinander erfolgen.

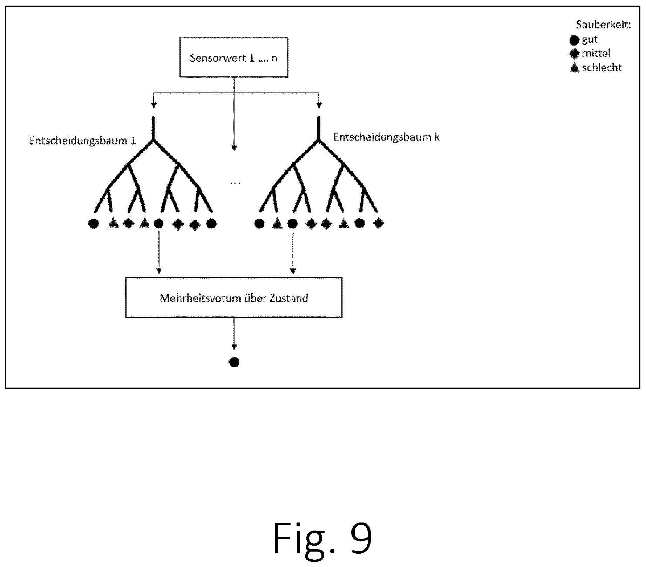

Die Inferenz (S21) kann beispielsweise anhand des mit Bezug auf Fig. 6 beschriebenen ML-Modells 20 erfolgen. Der geschätzte aktuelle Zustandswert zur Beschreibung des Zustands des Laserbearbeitungskopfes wird demnach durch das Mehrheitsvotum der k Entscheidungsbäume auf Basis der Messdaten und der Prozessdaten bestimmt, wie in Fig. 9 schematisch dargestellt ist.

Als Ergebnis bzw. als Ausgangsvektor des ML-Modells 20, beispielsweise mittels einer Klassifikation oder Regression, werden also geschätzte aktuelle Zustandsdaten ausgegeben, die den Zustand des gesamten Laserbearbeitungskopfes 10 und/oder zumindest eines Elements 13 des Laserbearbeitungskopfes 10, beispielsweise eines optischen Elements 13 wie einem Schutzglas, angeben oder beschreiben.

Der Ausgangsvektor bzw. die Zustandsdaten können beispielsweise in Form eines prozentualen Verschmutzungsgrads, eines Ampelsystems ("rot", "gelb", "grün") und/oder eines geschätzten aktuellen Fokusshifts ausgegeben werden. Ferner kann der Ausgangsvektor bzw. die Zustandsdaten eine genaue Einschätzung der verbleibenden Nutzungsdauer eines Elements, beispielsweise für eine vorbeugende Instandhaltung, umfassen. Dadurch ergibt sich der Vorteil, dass Elemente optimal ausgenutzt werden, da kein vorzeitiger Austausch erforderlich ist und kein ungeplanter oder unvorhergesehener Ausfall der Elemente auftritt. Der Ausgangsvektor bzw. die Zustandsdaten können dem Bediener 40 über eine App oder eine GUI 19, beispielsweise an einem Anlagenrechner 16, der Anlagensteuerung oder CNC 18 oder einer Web-GUI (nicht gezeigt) angezeigt und mitgeteilt werden. Weiterhin ist es möglich, dass die Recheneinheit 14 basierend auf dem bestimmten Ausgangsvektor bzw. den Zustandsdaten einen Stopp des Bearbeitungsprozesses veranlasst und/oder den Eingriff durch einen Bediener 40 fordert. Ferner ist es möglich, dass die Recheneinheit 14 den bestimmten Ausgangsvektor bzw. die bestimmten Zustandsdaten an die Anlagensteuerung 18 übermittelt und die Anlagensteuerung 18 basierend darauf Prozessparameter verändert, um dem Laserbearbeitungsprozess zu regeln. Dadurch kann ein Bearbeitungsergebnis durch den Laserbearbeitungsprozess sichergestellt werden.

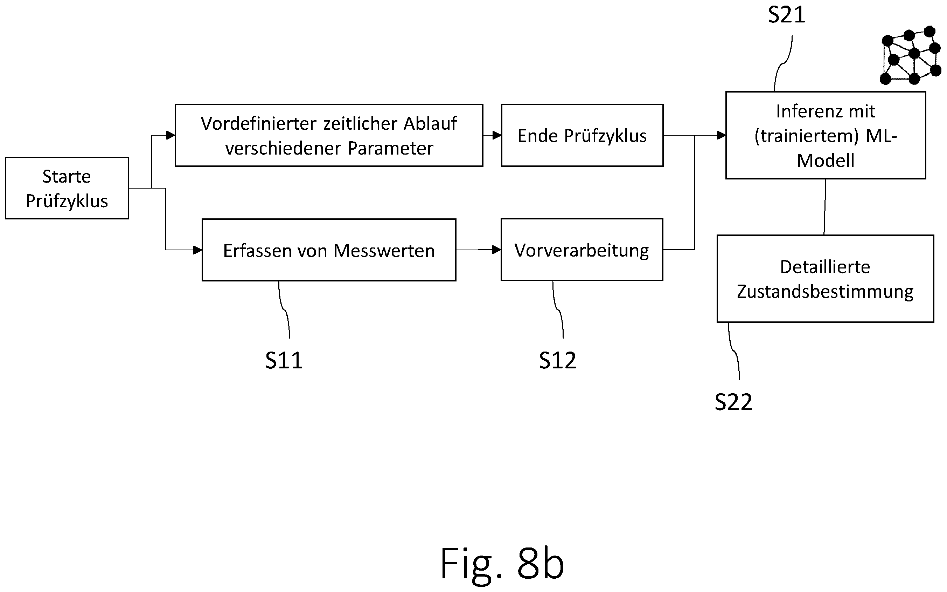

Die Inferenz (S21) kann - wie vorstehend beschrieben - entweder während eines Laserbearbeitungsprozesses oder zur Zustandsüberwachung mit höherer Genauigkeit in einem Prüfzyklus durchgeführt werden. Der Prüfzyklus kann einem Laserbearbeitungsprozess mit weitgehend gleichbleibenden Rahmenbedingungen, beispielsweise einer konstanten Laserleistung und/oder vordefinierten Zeitabläufen, entsprechen. Fig. 8b zeigt schematisch den Ablauf eines Verfahrens zur Zustandsüberwachung eines Laserbearbeitungskopfes bei einem Prüfzyklus gemäß Ausführungsformen der vorliegenden Erfindung.

Die Zustandsüberwachung kann im Rahmen eines vor- oder nachgelagerten Prüf- oder Testzyklus durchgeführt werden. Dies hat den Vorteil einer daraus resultierenden, höheren Aussagegenauigkeit. In beiden Fällen muss der Aufbau des Laserbearbeitungskopfes bzw. das Laserbearbeitungssystem nicht verändert werden und es sind keine zusätzlichen Hilfsmittel, wie reflektierende Flächen oder Kamerasysteme, nötig.

Der Prüfzyklus kann insbesondere ein vordefinierter Prüfzyklus sein, der eine definierte zeitliche Abfolge bzw. einen definierten zeitlichen Verlauf verschiedener Parameter umfasst, beispielsweise Parameter der Laserquelle 12, des Lasers bzw. des Laserstrahls 28, Parameter des Laserbearbeitungskopfes 10 und/oder Parameter weiterer Elemente, beispielsweise Maschinen, Roboter, Achsen, Gas etc..

Der Prüfzyklus kann beispielsweise eines oder mehrere der folgenden Merkmale, die Bearbeitungsparameter definieren, aufweisen: Die mittlere Laserleistung Pmittel während des Prüfzyklus kann durch Pmittel ≥ 0,1 kW, insbesondere Pmittel ≥ 0,5 kW, festgelegt sein. Die Zeitdauer T des Prüfzyklus kann durch T≤ 300 s festgelegt sein. Ferner können während des Prüfzyklus eine oder mehrere Fokuslagen des Laserstrahls 28 bzw. Optikpositionen (z-Lage) im Laserbearbeitungskopf 10 derart gewählt, dass jedes optische Element 13 mindestens einmal maximal ausgeleuchtet wird.

Optionale Merkmale des Prüfzyklus können umfassen: Der Laserbearbeitungskopf 10 kann während des Prüfzyklus für zumindest 10 s (kumuliert über die gesamte Zeitdauer des Prüfzyklus) mit einem Gasdruck p beaufschlagt werden, der größer oder gleich des Umgebungsdrucks pₐₜₘ entspricht, also p ≥ pₚₐₜₘ. Mit Hilfe der Druckbeaufschlagung wird zum einen eine Verschmutzung der optischen Elemente des Laserbearbeitungskopfes 10 bzw. eines optischen Systems des Laserbearbeitungskopfes 10 während des Prüfzyklus vermieden. Zum anderen können dadurch Drucksensoren und die Dichtigkeit des Laserbearbeitungskopfes 10 überprüft werden. Ferner können während des Prüfzyklus eine oder mehrere Fokuslagen bzw. Optikpositionen (z-Lage) im Laserbearbeitungskopf 10 derart gewählt werden, dass jedes optische Element mindestens einmal minimal ausgeleuchtet wird.

Die gewählte Laserleistung für den Prüfzyklus zielt auf eine hohe Anwendbarkeit im Feld ab, d.h. beim Einsatz des Laserbearbeitungskopfes 10 beim Kunden, und soll so gering wie möglich sein. Eine kurze Zeitdauer T zielt auf eine hohe Akzeptanz im Feld und bei den Kunden ab. Und die maximale Ausleuchtung der optischen Elemente hat zur Folge, dass auch eine Verschmutzung im Randbereich der optischen Elemente erfasst werden kann.

Die in Fig. 8b gezeigten Schritte S11, S12, S21, S22 des Prüfzyklus entsprechen im Wesentlichen den in Fig. 8a gezeigten Schritten S11, S12, S21, S22. Die Schritte S11, S12 können während des Prüfzyklus ebenfalls kontinuierlich und/oder nach vorgegebenen Zeitintervallen wiederholt ablaufen. Die Schritte S21, S22 können nach Beendigung des Prüfzyklus ablaufen. Dadurch kann der Zustand eines Laserbearbeitungskopfes 10 oder eines einzelnen Elements 13, beispielsweise einer Optik, detailliert bestimmt, bewertet und überwacht werden.

Die vorliegende Erfindung beruht auf der Verwendung von Modellen bzw. Algorithmen des maschinellen Lernens zur ganzheitlichen Bestimmung, Bewertung und Überwachung eines Zustands eines Laserbearbeitungskopfes oder einzelnen Elementen davon, beispielsweise von optischen, mechanischen und/oder elektrischen Elementen. Beispielsweise kann eine gesamtheitliche bzw. ganzheitliche Zustandsklassifikation des Laserbearbeitungskopfes angegeben werden als: "funktioniert gut", "funktioniert noch", "kann/sollte nicht mehr verwendet werden", etc. Basierend auf dem bestimmten Zustand können Maßnahmen empfohlen werden. Ein ganzheitliches Modell zum Bestimmen des ganzheitlichen Zustands des Laserbearbeitungskopfs kann aus ML-Modellen bestehen, die für einzelne Elemente des Laserbearbeitungskopfes optimiert sind und zur Bestimmung des Zustands des jeweiligen Elements dienen, beispielsweise basierend auf einer Kombination von Messdaten, die von verschiedenen Sensoren erfasst wurden, etwa Streulicht-, Temperatur-, und/oder Drucksensoren, optional auch basierend auf weiteren Daten, insbesondere Prozessdaten. Die Prozessdaten können Werte oder zeitliche Verläufe verschiedener Prozessparameter, beispielsweise Laserparameter, insbesondere der Laserleistung, umfassen. Die ML-Modelle können beispielsweise auf Random Forest Algorithmen basieren. Das Ergebnis einer Inferenz mit dem ganzheitlichen Modell dient zur Bestimmung des Zustands des Laserbearbeitungskopfes, beispielsweise während eines Laserbearbeitungsprozesses oder in einem Prüfzyklus. Dabei muss der Aufbau eines den Laserbearbeitungskopf enthaltenden Laserbearbeitungssystems nicht verändert werden und der Laserbearbeitungsprozess muss nicht unterbrochen werden. Die ML-Modelle bzw. -Algorithmen können außerdem Umgebungseinflüsse und deren komplexen Einfluss auf die einzelnen Elemente berücksichtigen, beispielsweise die Außentemperatur und den Außendruck.

Ferner bieten die ML-Modelle bzw. die MI,-Algorithmen die Möglichkeit, den Laserbearbeitungsprozess zu regeln bzw. nachzusteuern, bis hin zu einer "Closed Loop"-Regelung von Bearbeitungsparametern, wie Fokuslage oder Vorschubgeschwindigkeit. Außerdem ist das Verfahren zur Zustandsüberwachung gemäß Ausführungsformen der vorliegenden Erfindung auf die Zustandsüberwachung eines Laserbearbeitungskopfes bzw. einzelner (optischer) Elemente auf verschiedene Arten von Laserbearbeitungsprozessen, beispielsweise Laserschneiden, Laserschweißen und Laserauftragsschweißen, anwendbar oder übertragbar. Ein weiterer Vorteil der vorliegenden Erfindung ist die Verringerung des notwendigen Know-Hows eines Bedieners des Laserbearbeitungskopfes bzw. des Laserbearbeitungssystems zur Erkennung eines Fehlers aufgrund eines abgenutzten oder degradierten Elements. Durch die intelligente Verarbeitung bzw. Analyse der aktuellen Messdaten bzw. weiterer Daten, beispielsweise von aktuellen Werten von Laserparametern oder Prozessparametern mit Hilfe der MI,-Algorithmen wird der komplexe Zusammenhang der Sensoren und der Zustand von Elementen des Laserbearbeitungskopfs für einen Bediener verständlich interpretierbar ausgegeben. Zur Fehleranalyse müssen keine Messwerte interpretiert werden, sondern die Erfindung ermöglicht eine verständliche bereits interpretierte Einschätzung des Zustands einzelner Elemente oder des gesamten Laserbearbeitungskopfes, beispielsweise anhand eines Ampelsystems, einer Schätzung des momentanen dynamischen Fokusabweichung des Bearbeitungskopfes und/oder einer Zeitangabe über die verbleibende Nutzungsdauer.

Im Folgenden werden konkrete Beispiele und Ausführungsformen eines Verfahrens zur Zustandsüberwachung eines Laserbearbeitungskopfes beschrieben.

Wie bereits zuvor beschrieben, umfasst das Verfahren zur Zustandsüberwachung eines Laserbearbeitungskopfes die Schritte: Erfassen von Messdaten durch zumindest eine an oder in dem Laserbearbeitungskopf angeordnete Sensoreinheit, Bestimmen eines Eingangsvektors basierend auf den erfassten Messdaten; und Bestimmen eines Ausgangsvektors durch Anwenden eines durch maschinelles Lernen trainierten Modells auf den Eingangsvektor, wobei der Ausgangsvektor geschätzte Zustandsdaten von zumindest zwei Elementen des Laserbearbeitungskopfes zur Bestimmung des Gesamtzustands des Laserbearbeitungskopfes enthält.

In konkreten Ausführungsformen kann der Ausgangsvektor geschätzte Zugangsdaten enthalten, die mindestens eines der folgenden umfassen: "Art einer Verschmutzung eines optischen Elements" (Fall 1), "Verschmutzungsgrad eines optischen Elements" (Fall 2) und "Abweichung einer aktuellen Fokuslage des Laserstrahls von einer Soll-Fokuslage" (Fall 3). In jeder dieser konkreten Ausführungsformen kann der Eingangsvektor beispielsweise auf Basis von Prozessparametern bestimmt werden, wobei die Prozessparameter bzw. Prozessdaten mindestens eines der folgenden umfasst: eine Laserleistung, eine Fokuslage und/oder ein Abbildungsverhältnis und/oder eine Brennweite. In jedem dieser Fälle oder Fallkombinationen können die erfassten Messdaten zum Bestimmen des Eingangsvektors mindestens eines der folgenden umfassen: zumindest eine Temperatur und zumindest eine Intensität von Streulicht eines optischen Elements.

In anderen Worten können die Zustandsdaten, insbesondere eine "Art einer Verschmutzung eines optischen Elements", ein "Verschmutzungsgrad eines optischen Elements" und/oder eine "Abweichung einer aktuellen Fokuslage des Laserstrahls von einer Soll-Fokuslage" jeweils basierend auf Prozessdaten, wie einer Laserleistung, einer Fokuslage und/oder eines Abbildungsverhältnisses und/oder einer Brennweite und Messdaten, wie zumindest einer Temperatur und zumindest einer Intensität von Streulicht eines optischen Elements geschätzt werden.

Als Beispiel sei aus diesen Kombinationsmöglichkeiten folgende noch konkretere Ausführungsform genannt: die Zustandsdaten entsprechen einer "Art einer Verschmutzung eines optischen Elements" und basierend auf Prozessdaten umfassend eine Laserleistung und auf Messdaten umfassend zumindest eine Temperatur geschätzt werden. Entsprechende konkrete Beispiele bestehen jeweils in allen denkbar permutierten Kombinationen dieser Ausführungsformen.

In weiteren konkreten Ausführungsformen (genannt Fall 4) können Zustandsdaten eine Angabe über die Funktionsfähigkeit des Laserbearbeitungskopfes aufweisen, wie beispielsweise eine Leckage, wobei die Angabe basierend auf Prozessdaten geschätzt wird, wie beispielsweise einem Gasdruck in einem Innenraum des Laserbearbeitungskopfes und/oder einem Gasdruck (z.B. eine Vorgabe an einem Gasventil), einem Düsendurchmesser, einem Abstand des Laserbearbeitungskopfes von einem Werkstück und weiter basierend auf Messdaten, die beispielsweise einen Gasdruck zwischen zwei optischen Elementen und/oder ein optisches Element umfassen.

In anderen Worten kann in diesen konkreten Ausführungsformen der Ausgangsvektor eine Angabe über die Funktionsfähigkeit des Laserbearbeitungskopfes, wie beispielsweise eine Leckage, als geschätzte Zugangsdaten enthalten. Insbesondere in diesem Fall kann der Eingangsvektor beispielsweise auf Basis der folgenden Prozessparameter bestimmt werden: einen Gasdruck in einem Innenraum des Laserbearbeitungskopfes und/oder einen Gasdruck (z.B. eine Vorgabe an einem Gasventil), einen Düsendurchmesser, einen Abstand des Laserbearbeitungskopfes von einem Werkstück. In einem dieser Fälle können Messdaten insbesondere einen Gasdruck zwischen zwei optischen Elementen und/oder ein optisches Element umfassen.

In einer weiteren Ausführungsform (genannt Fall 5) kann eine Angabe über die Funktionsfähigkeit des Laserbearbeitungskopfes, beispielsweise ein Bandriss basierend auf Prozessdaten umfassend eine Fokuslage des Laserbearbeitungskopfes und basierend auf Messdaten umfassend elektrische Ströme von oder zu einem Element und/oder Kommunikationssignale eines Elements.

Im Folgenden werden beispielhafte Ausführungsformen von Algorithmen beschrieben. Zunächst wird die Analyse bei einer Verschmutzung eines optischen Elements und dem Einfluss auf Zustandsdaten, wie die "Abweichung einer aktuellen Fokuslage des Laserstrahls von einer Soll-Fokuslage" (weiter oben beschriebener Fall 3) beschrieben.

Im Detail kann für die Analyse eines Einflusses der Temperaturwerte und/oder erfassten Daten von Streulichtsensoren aus Fig. 3a bis 3d auf den Anteil der Abweichung einer aktuellen Fokuslage des Laserstrahls von einer Soll-Fokuslage ein Support Vector Regressor eingesetzt und angepasst werden. Der Support Vector Regressor kann insbesondere auf eine Zeitspanne von mehreren Sekunden angewendet werden.

Dabei ist es insbesondere vorteilhaft, eine lineare Kerneloptimierung durchzuführen. Es wird ein komplexer Zusammenhang von Streulichtsensoren und Temperatursensoren bei der Regression der Abweichung einer aktuellen Fokuslage von einem idealen Zustand mit theoretischer Fokusausgangslage berücksichtigt und auch bei geringer Datengrundlage abstrahiert.

Dadurch können insbesondere Grenzfälle, die selten auftreten, wie z.B. eine starke Verschmutzung (Verschmutzungsgrad und/oder Art der Verschmutzung) eines optischen Elements, im industriellen Umfeld zuverlässig eingeordnet werden, ohne dass diese Fälle vorab jemals eingetreten sein müssen. Es handelt sich daher um eine Abstraktion bislang unbekannter Verschmutzungsfälle.

Beim Training eines Algorithmus, beispielsweises eines SVR-Algorithmus kann ein Trainingsparameter C beispielsweise groß gewählt werden, um das Modell auf ein spezifisches, optisches Abbildungssystem anzupassen. Vorzugsweise liegt C im Bereich 0,1< C <2,0, insbesondere im Bereich 0,4< C <1,5. Dies entspricht der Abstimmung auf ein System. Wenn ein Testdatensatz mit dem Modell anschließend gut erkannt wird, ist das Modell typischerweise ausreichend genau und liefert Sicherheit bei zukünftigen, unbekannten Fällen bei einer spezifischen Konfiguration der Fig. 3a bis 3d. Der Trainingsparameter Epsilon kann dabei möglichst klein gewählt werden, um die Verlustfunktion zu limitieren. Vorzugsweise liegt Epsilon im Bereich 0< Epsilon <1,0, insbesondere im Bereich 0< Epsilon <0,55. Dadurch ergibt sich üblicherweise ein gut gelernter Zusammenhang von Laserleistung, Streulicht und Temperaturmessungen an Optiken und deren Degradierung bei unterschiedlichen Verschmutzungsbildern. Dies entspricht der Abstimmung komplexer Zusammenhänge der Messwerte.

Im Folgenden wird der Einsatz eines neuronalen Netzes für den oben genannten Fall 3 näher beschrieben.

Insbesondere bei der direkten Live-Schätzung bzw. real time-Abschätzung der Abweichung einer aktuellen Fokuslage des Laserstrahls kann ein neuronales Netz verwendet werden. Dabei werden die Eingangsvektoren oder die Eingangstensoren beispielsweise gebildet aus zumindest einer Temperatur und zumindest einer Intensität von Streulicht eines optischen Elements (entspricht den Messdaten) sowie insbesondere einer Laserleistung, einer Fokuslage und/oder eines Abbildungsverhältnisses und/oder einer Brennweite (entspricht den Prozessdaten). Der Ausgangsvektor bzw. Ausgangstensor gibt die "Abweichung einer aktuellen Fokuslage des Laserstrahls von einer Soll-Fokuslage" zurück. Als Architektur des neuronalen Netzes eignet sich für die Live-Schätzung insbesondere ein einfaches, tiefes neuronales Netzwerk, welches aus mindestens drei versteckten Zwischenschichten besteht. Dadurch wird eine ausreichende Abstraktion erzielt, welche bei mittelgroßen Datensätzen keine Überanpassung des Modells (Overfitting) zur Folge hat und relativ rauschunabhängig bezüglich der Messdaten ist.

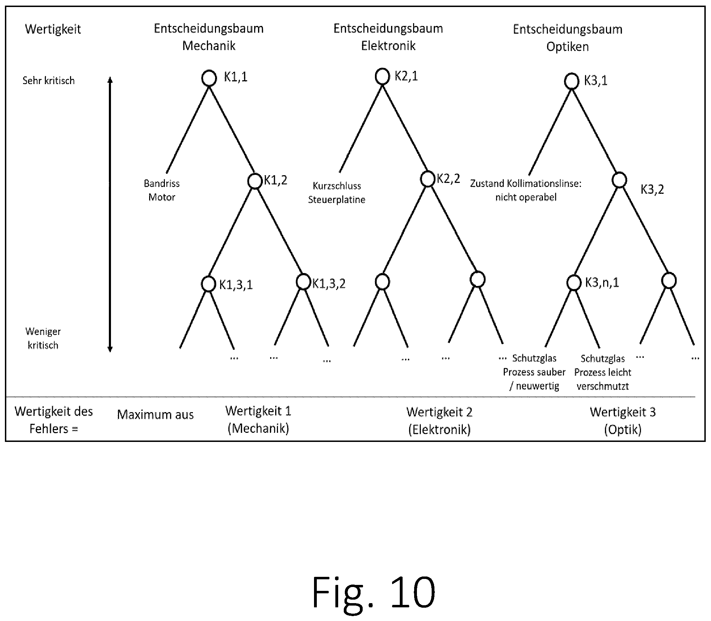

Nachfolgend wird eine allgemeine Einschätzung des (Laserbearbeitungs-)Kopfzustands näher anhand der Fig. 10 beschrieben. Die Einschätzung des Gesamtkopfzustands kann beispielsweise in drei Ausgangszustände kategorisiert werden: Ausgangszustand A) entspricht dem Optimalzustand, in dem der Kopf operabel ist, Ausgangszustand B) entspricht einem nicht optimalen Zustand, in dem der Kopf mit Einschränkungen operabel ist und/oder eine Warnungsmeldung vorliegt und Ausgangszustand C) entspricht einem fehlerhaften Zustand, in dem der Kopf nicht (mehr) operabel ist.

In Fig. 10 ist ein Entscheidungsbaum dargestellt, der eine Ausführungsform für einen Algorithmus des maschinellen Lernens darstellt. Der Algorithmus kann beispielsweise aufgrund lesbarer Entscheidungsstrukturen nachvollzogen und daher durch einen Anwender angepasst werden. Dadurch kann Anwenderwissen gezielt eingearbeitet werden. Daher können komplexe (durch Support Vector Regression SVR, Neuronalen Netzen NN oder Random Forests RF) und einfache Zusammenhänge (Fuzzy Logic, Entscheidungsbaum durch historische Erfahrungen von (menschlichen) Anwendern) vereint werden. Sofern beispielsweise ein Motor oder eine mechanische Komponente ausfällt (z.B. detektiert durch unverhältnismäßig hohem oder geringem Motorstrom) kann die Entscheidung direkt aus Erfahrungswerten eingepflegt werden.

Wie in Fig. 10 gezeigt, können im Detail zwischen drei verschiedenen Entscheidungsbäumen unterschieden werden: Mechanik, Elektronik und Optik. Jeder Knoten Kx,y,z entspricht einer Entscheidungsfindung basierend auf einem Schwellwert (z.B. wenn die gemessene Temperatur eines Bauteils eine aus historischen bzw. zuvor erfassten Daten eine bekannte Vorgabe überschreitet), basierend auf einem Algorithmus des maschinellen Lernens (z.B. SVR, NN und/oder RF) oder basierend auf diskreten Digitalsignalen (z.B. Kommunikationssignale einer elektronischen Platine wie Fehlerbits bei einer Datenübertragung). Dabei definiert der Index x den jeweiligen Entscheidungsbaum, der Index y die Ebene innerhalb eines Entscheidungsbaums und der Index z die Position des Knotens innerhalb einer Ebene.

Die binäre Entscheidung eines Knotens wird zwischen der Kategorisierung in "Fehler" und "kein Fehler" durchgeführt. Im Fall "kein Fehler" wird eine Ebene tiefer in den jeweiligen Entscheidungsbäumen iteriert. Im Fall "Fehler" wird eine Wertigkeit des Fehlers ermittelt. Je früher und/oder höher der Fehler im Entscheidungsbaum ermittelt wird, desto gewichtiger ist der Fehler des einzelnen Entscheidungsbaums. Anhand des maximalen Fehlers aller Entscheidungsbäume kann somit der allgemeine, aktuelle Kopfzustand ermittelt werden. Dabei entsprechen beispielsweise die Fehler in den obersten Knoten (Kx,1) der Wertigkeit 1,0. Im untersten Knoten (Kx,n,m) entsprechen die Fehler der Wertigkeit 0,0. Dabei indiziert m alle Knoten in der tiefsten Ebene n. Sollte die maximale Fehlergewichtung der drei Entscheidungsbäume 1,0 ergeben, so ist der Laserbearbeitungskopf nicht mehr operabel und der oben beschriebene Zustand C) liegt vor. Zwischen 1,0 und 0,0, wobei 1,0 und 0,0 nicht mit eingeschlossen sind, befindet sich der Kopf in Zustand B). Bei Wertigkeit 0,0 befindet sich der Kopf in Zustand A).

Alle hierin gemachten Angaben, die durch Zahlenwerte quantifiziert werden, sind etwaige Angaben und können insbesondere zwischen 1-5% von den besagten Zahlenwerten abweichen.

### Bezugszeichenliste

- 1: Werkstück
- 10: Laserbearbeitungskopf
- 11: Innenraum des Laserbearbeitungskopfes
- 12: Laserquelle/Laser
- 13: Elemente des Laserbearbeitungskopfes
- 14: Recheneinheit
- 15: Gehäuse des Laserbearbeitungskopfes
- 16: Anlagenrechner
- 18: Anlagensteuerung/CNC
- 19: GUI
- 20: ML-Modell
- 22: elementspezifisches ML-Modell
- 24: ganzheitliches MI,-Modell
- 40: Bediener
- 50: Expertenwissen
- 60: Datenpool/Datengrundlage

## Patentansprüche

1. Verfahren zur Zustandsüberwachung eines Laserbearbeitungskopfes (10), das Verfahren umfassend die Schritte:
- Erfassen von Messdaten durch zumindest eine an oder in dem Laserbearbeitungskopf (10) angeordnete Sensoreinheit,
- Bestimmen eines Eingangsvektors basierend auf den erfassten Messdaten; und
- Bestimmen eines Ausgangsvektors durch Anwenden eines durch maschinelles Lernen trainierten Modells (20) auf den Eingangsvektor,
**dadurch gekennzeichnet dass**,
der Ausgangsvektor geschätzte Zustandsdaten von zumindest zwei Elementen (13) des Laserbearbeitungskopfes (10) zur Bestimmung des Gesamtzustands des Laserbearbeitungskopfes (10) enthält,
wobei das Modell (20) eine Vielzahl von ersten Modellen (22) zum Bestimmen von Zustandsdaten von jeweils einem Element (13) des Laserbearbeitungskopfes (10) und ein zweites Modell (24) zum Bestimmen von Zustandsdaten des Laserbearbeitungskopfes (10) aus den von den ersten Modellen (22) erhaltenen Zustandsdaten der Elemente (13) umfasst.

2. Verfahren nach Anspruch 1, wobei die Zustandsdaten umfassen: eine Art einer Verschmutzung eines Elements, einen Verschmutzungsgrad eines Elements, einen Abnutzungsgrad eines Elements, einen Alterungsgrad eines Elements, eine verbleibende Nutzungsdauer eines Elements, eine veränderte Brennweite eines Elements, eine Abweichung einer aktuellen Fokuslage des Laserstrahls von einer Soll-Fokuslage, und/oder eine Angabe über die Funktionsfähigkeit des Laserbearbeitungskopfes.

3. Verfahren nach einem der vorstehenden Ansprüche, wobei das Bestimmen des Eingangsvektors ferner basierend auf zumindest einem Prozessparameter erfolgt.

4. Verfahren nach Anspruch 3, wobei der zumindest eine Prozessparameter einen der folgenden umfasst: eine Laserleistung, eine Fokuslage des Laserbearbeitungskopfes, einen Gasdruck, eine Vorschubgeschwindigkeit des Laserbearbeitungskopfes, ein Abbildungsverhältnis des Laserbearbeitungskopfes, eine Brennweite des Laserbearbeitungskopfes oder einen Abstand des Laserbearbeitungskopfes von einem Werkstück (1).

5. Verfahren nach einem der vorstehenden Ansprüche, wobei das zumindest eine Element (13) zumindest eines der folgenden umfasst: ein optisches Element, ein Schutzglas, einen Strahlteiler, einen Spiegel, eine Linse, eine Linsengruppe, eine Fokussierlinse, eine Fokussieroptik, eine Kollimationsoptik, eine Kollimationslinse, ein mechanisches Element, einen Aktuator, einen Motor, eine Düse, eine Düsenelektrode, ein Keramikteil, eine Schneidgasführung, ein Kühlelement, ein elektrisches und/oder elektronisches Element, eine Platine, eine Steuerplatine, eine Kommunikationsplatine, ein Leistungsbauteil, und eine Motorsteuerung.

6. Verfahren nach einem der vorstehenden Ansprüche, wobei die Messdaten Werte von zumindest einer der folgenden Messgrößen umfassen: eine Feuchtigkeit, eine Luftfeuchtigkeit in einem Innenraum (11) des Laserbearbeitungskopfes (10), eine Luftfeuchtigkeit einer Umgebung des Laserbearbeitungskopfes (10), eine Temperatur, eine Temperatur einer Umgebung des Laserbearbeitungskopfes (10), eine Temperatur eines Gehäuses (15) des Laserbearbeitungskopfes (10), eine Temperatur in einem Innenraum (11) des Laserbearbeitungskopfes (10), eine Temperatur eines Elements (13) des Laserbearbeitungskopfes (10), eine Kühlflüssigkeitstemperatur, eine Temperaturstrahlungsintensität, eine Strahlungsintensität, eine Streulichtintensität, eine Intensität einer von einem Element (13) des Laserbearbeitungskopfes (10) zurückgestrahlten und/oder gestreuten Strahlung, eine Intensität von Streulicht in einem Innenraum (11) des Laserbearbeitungskopfes (10), eine Intensität von Streulicht eines optischen Elements, elektrische Ströme von oder zu einem Element (13), elektrische Spannungen an einem Element (13), Kommunikationssignale eines Elements (13), ein Gasdruck in einem Innenraum (11) des Laserbearbeitungskopfes (10), ein Gasdruck zwischen zwei optischen Elementen (13) und/oder auf ein optisches Element (13), eine Beschleunigung eines Elements (13) des Laserbearbeitungskopfes (10) und/oder des Laserbearbeitungskopfes (10) und eine Vibration eines Elements (13) des Laserbearbeitungskopfes (10) und/oder des Laserbearbeitungskopfes (10).

7. Verfahren nach einem der vorstehenden Ansprüche, wobei das Modell (20), bzw. das erste Modell (22) und das zweite Modell (24), auf zumindest einem der folgenden Algorithmen basiert: Random Forest, Support Vector Machine, einem neuronalen Netz, einem rekurrenten neuronalen Netz, einem faltenden neuronalen Netz und einem tiefen faltenden neuronalen Netz.

8. Verfahren nach einem der vorstehenden Ansprüche, wobei das Modell (20) für Transfer Learning eingerichtet ist und/oder für verstärkendes Lernen adaptierbar ist.

9. Verfahren nach einem der vorstehenden Ansprüche, wobei das Verfahren zur Zustandsüberwachung während eines Prüfzyklus durchgeführt wird.

10. Verfahren nach Anspruch 9, wobei während des Prüfzyklus eine Fokuslage so eingestellt wird, dass mindestens ein optisches Element des Laserbearbeitungskopfes (10) maximal oder minimal ausgeleuchtet wird.

11. Verfahren nach einem der vorstehenden Ansprüche, wobei das Verfahren zur Zustandsüberwachung während eines Laserbearbeitungsprozesses durchgeführt wird und/oder wobei der Ausgangsvektor wiederholt und/oder kontinuierlich während eines Laserbearbeitungsprozesses bestimmt wird.

12. Verfahren nach einem der vorstehenden Ansprüche, ferner umfassend:
- Ausgeben des Ausgangsvektors an einen Bediener (40) des Laserbearbeitungskopfes (10) oder einer Information über einen Zustand des zumindest einen Elements und/oder des Laserbearbeitungskopfs mittels einer Benutzerschnittstelle (19); und/oder
- Ausgeben von zumindest einer Handlungsempfehlung an den Bediener (40) des Laserbearbeitungskopfes (10) mittels einer Benutzerschnittstelle (19).

13. Verfahren nach einem der vorstehenden Ansprüche, wobei das Verfahren zur Zustandsüberwachung während eines Laserbearbeitungsprozesses durchgeführt wird und ferner zumindest einen der Schritte umfasst:
- Regeln des Laserbearbeitungsprozesses durch Ändern von zumindest einem Prozessparameter basierend auf dem bestimmten Ausgangsvektor; und
- Anhalten des Laserbearbeitungsprozesses.

14. Laserbearbeitungssystem, umfassend:
- einen Laserbearbeitungskopf (10) mit zumindest einer Sensoreinheit zum Erfassen von Messdaten, die an oder in einem Gehäuse (15) des Laserbearbeitungskopfs (10) angeordnet ist,
**dadurch gekennzeichnet, dass** das Laserbearbeitungssystem folgende weitere Merkmale umfasst:
- eine Recheneinheit (14), die eingerichtet ist, basierend auf den erfassten Messdaten einen Eingangsvektor zu bestimmen, und durch Anwenden eines durch maschinelles Lernen trainierten Modells (20) auf den Eingangsvektor einen Ausgangsvektor zu bestimmen,
wobei der Ausgangsvektor geschätzte Zustandsdaten von zumindest zwei Elementen (13) des Laserbearbeitungskopfes (10) zur Bestimmung des Gesamtzustands des Laserbearbeitungskopfes (10) enthält, und
wobei das Modell (20) eine Vielzahl von ersten Modellen (22) zum Bestimmen von Zustandsdaten von jeweils einem Element (13) des Laserbearbeitungskopfes (10) und ein zweites Modell (24) zum Bestimmen von Zustandsdaten des Laserbearbeitungskopfes (10) aus den von den ersten Modellen (22) erhaltenen Zustandsdaten der Elemente (13) umfasst.

15. Laserbearbeitungssystem gemäß Anspruch 14, wobei die Sensoreinheit zumindest einen der folgenden Sensoren enthält: einen Feuchtigkeitssensor, einen Temperatursensor, einen Photodetektor, einen Drucksensor, einen Streulichtsensor, einen Beschleunigungssensor, einen Stromsensor, einen Spannungssensor, einen Abstandssensor, einen Schallsensor, einen Beschleunigungssensor und einen Vibrationssensor.

## Claims

1. A method for monitoring the condition of a laser machining head (10), said method comprising the steps of:
- acquiring measurement data by means of at least one sensor unit arranged on or in said laser machining head (10),
- determining an input vector based on the acquired measurement data; and
- determining an output vector by applying a model (20) trained by machine learning to the input vector,
**characterised in that**
the output vector contains estimated condition data of at least two elements (13) of said laser machining head (10) for determining the overall condition of said laser machining head (10),
wherein the model (20) comprises a plurality of first models (22) for determining condition data of one element (13) of said laser machining head (10) each, and a second model (24) for determining condition data of said laser machining head (10) from the condition data of the elements (13) obtained from the first models (22).

2. The method according to claim 1, wherein the condition data include: a type of soiling of an element, a degree of soiling of an element, a degree of wear of an element, a degree of aging of an element, a remaining service life of an element, a changed focal length of an element, a deviation of a current focus position of the laser beam from a target focus position, and/or an indication of the functionality of the laser machining head.

3. The method according to one of the preceding claims, wherein the input vector is further determined based on at least one process parameter.

4. The method according to claim 3, wherein the at least one process parameter comprises one of: a laser power, a focus position of the laser machining head, a gas pressure, a feed rate of the laser machining head, an imaging ratio of the laser machining head, a focal length of the laser machining head, or a distance of the laser machining head from a workpiece (1).

5. The method according to one of the preceding claims, wherein the at least one element (13) comprises at least one of: an optical element, a protective glass, a beam splitter, a mirror, a lens, a lens group, a focusing lens, focusing optics, collimating optics, a collimating lens, a mechanical element, an actuator, a motor, a nozzle, a nozzle electrode, a ceramic part, a cutting gas duct, a cooling element, an electrical and/or electronic element, a board, a control board, a communication board, a power component, and a motor control.

6. The method according to one of the preceding claims, wherein the measurement data include values of at least one of the following measurement variables: humidity, humidity in an interior space (11) of said laser machining head (10), humidity in an area surrounding said laser machining head (10), a temperature, a temperature of an area surrounding said laser machining head (10), a temperature of a housing (15) of said laser machining head (10), a temperature in an interior space (11) of said laser machining head (10), a temperature of an element (13) of said laser machining head (10), a coolant temperature, a thermal radiation intensity, a radiation intensity, a scattered light intensity, an intensity of a radiation reflected and/or scattered by an element (13) of said laser machining head (10), an intensity of scattered light in an interior space (11) of said laser machining head (10), an intensity of scattered light from an optical element, electric currents from or to an element (13), electrical voltages at an element (13), communication signals of an element (13), a gas pressure in an interior space (11) of said laser machining head (10), a gas pressure between two optical elements (13) and/or on an optical element (13), an acceleration of an element (13) of said laser machining head (10) and/or said laser machining head (10), and a vibration of an element (13) of said laser machining head (10) and/or said laser machining head (10).

7. The method according to one of the preceding claims, wherein the model (20), or the first model (22) and the second model (24), is based on at least one of the following algorithms: random forest, support vector machine, a neural network, a recurrent neural network, a convolutional neural network and a deep convolutional neural network.

8. The method according to one of the preceding claims, wherein the model (20) is configured for transfer learning and/or is adaptable for reinforcement learning.

9. The method according to one of the preceding claims, wherein the method for condition monitoring is carried out during a test cycle.

10. The method according to claim 9, wherein, during the test cycle, a focus position is set such that at least one optical element of said laser machining head (10) is illuminated maximally or minimally.

11. The method according to one of the preceding claims, wherein said method for condition monitoring is carried out during a laser machining process and/or wherein the output vector is determined repeatedly and/or continuously during a laser machining process.

12. The method according to one of the preceding claims, further comprising:
- outputting the output vector to an operator (40) of said laser machining head (10) or information about a condition of the at least one element and/or the laser machining head by means of a user interface (19); and/or
- outputting at least one recommendation for action to the operator (40) of said laser machining head (10) by means of a user interface (19).

13. The method according to one of the preceding claims, wherein said method for condition monitoring is carried out during a laser machining process and further comprises at least one of the steps of:
- controlling the laser machining process by changing at least one process parameter based on the determined output vector; and
- stopping the laser machining process.

14. A laser machining system, comprising:
- a laser machining head (10) having at least one sensor unit for acquiring measurement data which is arranged on or in a housing (15) of said laser machining head (10),
**characterised in that** the laser machining system comprises the following, further features:
- a computing unit (14) configured to determine an input vector based on the acquired measurement data and to determine an output vector by applying a model (20) trained by machine learning to the input vector,
wherein the output vector contains estimated condition data of at least two elements (13) of said laser machining head (10) for determining the overall condition of said laser machining head (10), and
wherein the model (20) comprises a plurality of first models (22) for determining condition data of, respectively, one element (13) of said laser machining head (10) and a second model (24) for determining condition data of said laser machining head (10) from the condition data of the elements (13) obtained from the first models (22).

15. The laser machining system according to claim 14, wherein the sensor unit includes at least one of the following sensors: a humidity sensor, a temperature sensor, a photodetector, a pressure sensor, a scattered light sensor, an acceleration sensor, a current sensor, a voltage sensor, a distance sensor, a sound sensor, an acceleration sensor and a vibration sensor.

## Revendications

1. Procédé destiné à surveiller l'état d'une tête d'usinage au laser (10), le procédé comportant les étapes consistant à :
- détecter des données de mesure par au moins une unité de capteur agencée sur ou dans la tête d'usinage au laser (10),
- déterminer un vecteur d'entrée sur la base des données de mesure détectées ; et
- déterminer un vecteur de sortie en appliquant au vecteur d'entrée un modèle (20) entraîné par apprentissage automatique,
**caractérisé en ce que**
le vecteur de sortie contient des données d'état estimées d'au moins deux éléments (13) de la tête d'usinage au laser (10) pour déterminer l'état global de la tête d'usinage au laser (10),
dans lequel le modèle (20) comprend une pluralité de premiers modèles (22) pour déterminer des données d'état respectivement d'un élément (13) de la tête d'usinage au laser (10), et un second modèle (24) pour déterminer des données d'état de la tête d'usinage au laser (10) à partir des données d'état des éléments (13) obtenues à partir des premiers modèles (22).

2. Procédé selon la revendication 1, dans lequel les données d'état comprennent : un type d'encrassement d'un élément, un degré d'encrassement d'un élément, un degré d'usure d'un élément, un degré de vieillissement d'un élément, une durée de vie restante d'un élément, une distance focale modifiée d'un élément, un écart d'une position focale actuelle du faisceau laser par rapport à une position focale cible et/ou une indication de la fonctionnalité de la tête d'usinage au laser.

3. Procédé selon l'une des revendications précédentes, dans lequel la détermination du vecteur d'entrée s'effectue en outre sur la base d'au moins un paramètre de processus.

4. Procédé selon la revendication 3, dans lequel le au moins un paramètre de processus comprend l'un des éléments suivants : une puissance de laser, une position focale de la tête d'usinage au laser, une pression de gaz, une vitesse d'avance de la tête d'usinage au laser, un taux d'imagerie de la tête d'usinage au laser, une distance focale de la tête d'usinage au laser ou une distance de la tête d'usinage au laser par rapport à une pièce (1).

5. Procédé selon l'une des revendications précédentes, dans lequel le au moins un élément (13) comprend au moins l'un des éléments suivants : un élément optique, un verre de protection, un séparateur de faisceau, un miroir, une lentille, un groupe de lentilles, une lentille de focalisation, une optique de focalisation, une optique de collimation, une lentille de collimation, un élément mécanique, un actionneur, un moteur, une buse, une électrode de buse, une pièce en céramique, un guide de gaz de coupe, un élément de refroidissement, un élément électrique et/ou électronique, une carte, une carte de commande, une carte de communication, un composant de puissance et une commande de moteur.

6. Procédé selon l'une des revendications précédentes, dans lequel les données de mesure comprennent des valeurs d'au moins une des grandeurs de mesure suivantes : une humidité, une humidité de l'air dans un espace intérieur (11) de la tête d'usinage au laser (10), une humidité de l'air entourant la tête d'usinage au laser (10), une température, une température aux alentours de la tête d'usinage au laser (10), une température d'un boîtier (15) de la tête d'usinage au laser (10), une température dans un espace intérieur (11) de la tête d'usinage au laser (10), une température d'un élément (13) de la tête d'usinage au laser (10), une température de liquide de refroidissement, une intensité de rayonnement thermique, une intensité de rayonnement, une intensité de lumière diffusée, une intensité d'un rayonnement réfléchi et/ou diffusé par un élément (13) de la tête d'usinage au laser (10), une intensité d'une lumière diffusée dans un espace intérieur (11) de la tête d'usinage au laser (10), une intensité d'une lumière diffusée d'un élément optique, des courants électriques depuis ou vers un élément (13), des tensions électriques au niveau d'un élément (13), des signaux de communication d'un élément (13), une pression de gaz dans un espace intérieur (11) de la tête d'usinage au laser (10), une pression de gaz entre deux éléments optiques (13) et/ou sur un élément optique (13), une accélération d'un élément (13) de la tête d'usinage au laser (10) et/ou de la tête d'usinage au laser (10) et une vibration d'un élément (13) de la tête d'usinage au laser (10) et/ou de la tête d'usinage au laser (10).

7. Procédé selon l'une des revendications précédentes, dans lequel le modèle (20), ou le premier modèle (22) et le second modèle (24), sont basés sur au moins l'un des algorithmes suivants : Random Forest, Support Vector Machine, un réseau neuronal, un réseau neuronal récurrent, un réseau neuronal convolutif et un réseau neuronal convolutif profond.

8. Procédé selon l'une des revendications précédentes, dans lequel le modèle (20) est configuré pour un apprentissage par transfert et/ou peut être adapté pour un apprentissage par renforcement.

9. Procédé selon l'une des revendications précédentes, dans lequel le procédé de surveillance d'état est mis en oeuvre pendant un cycle de test.

10. Procédé selon la revendication 9, dans lequel une position focale est réglée pendant le cycle de test de sorte qu'au moins un élément optique de la tête d'usinage au laser (10) est éclairé au maximum ou au minimum.

11. Procédé selon l'une des revendications précédentes, dans lequel le procédé de surveillance d'état est mis en oeuvre pendant un processus d'usinage au laser et/ou dans lequel le vecteur de sortie est déterminé de manière répétée et/ou en continu pendant un processus d'usinage au laser.

12. Procédé selon l'une des revendications précédentes, comprenant en outre de :
- fournir le vecteur de sortie à un opérateur (40) de la tête d'usinage au laser (10) ou une information sur un état du au moins un élément et/ou de la tête d'usinage au laser au moyen d'une interface utilisateur (19) ; et/ou
- fournir au moins une recommandation d'action à l'opérateur (40) de la tête d'usinage au laser (10) au moyen d'une interface utilisateur (19).

13. Procédé selon l'une des revendications précédentes, dans lequel le procédé de surveillance d'état est mis en oeuvre pendant un processus d'usinage au laser et comprend en outre au moins l'une des étapes consistant à :
- contrôler le processus d'usinage au laser en changeant au moins un paramètre de processus sur la base du vecteur de sortie déterminé ; et
- arrêter le processus d'usinage au laser.

14. Système d'usinage au laser, comprenant :
- une tête d'usinage au laser (10) ayant au moins une unité de capteur pour détecter des données de mesure, laquelle unité de capteur étant agencée sur ou dans un boîtier (15) de la tête d'usinage au laser (10),
**caractérisé en ce que** le système d'usinage au laser présente les caractéristiques supplémentaires suivantes :
- une unité de calcul (14) conçue pour déterminer un vecteur d'entrée sur la base des données de mesure détectées et pour déterminer un vecteur de sortie en appliquant au vecteur d'entrée un modèle (20) entraîné par apprentissage automatique,
dans lequel le vecteur de sortie contient des données d'état estimées d'au moins deux éléments (13) de la tête d'usinage au laser (10) pour déterminer l'état global de la tête d'usinage au laser (10), et
dans lequel le modèle (20) comprend une pluralité de premiers modèles (22) pour déterminer des données d'état respectivement d'un élément (13) de la tête d'usinage au laser (10), et un second modèle (24) pour déterminer des données d'état de la tête d'usinage au laser (10) à partir des données d'état des éléments (13) obtenues à partir des premiers modèles (22).

15. Système d'usinage au laser selon la revendication 14, dans lequel l'unité de capteur contient au moins l'un des capteurs suivants : un capteur d'humidité, un capteur de température, un photodétecteur, un capteur de pression, un capteur de lumière diffusée, un capteur d'accélération, un capteur de courant, un capteur de tension, un capteur de distance, un capteur de son, un capteur d'accélération et un capteur de vibration.
